(19) Europäisches Patentamt

European Patent Office

Office européen des brevets

(11) **EP 4 700 650 A2**

(12) **EUROPEAN PATENT APPLICATION**

(43) Date of publication:
**25.02.2026 Bulletin 2026/09**

(21) Application number: **26150888.1**

(22) Date of filing: **29.12.2023**

(51) International Patent Classification (IPC):
*G06N* (2006.01)

(52) Cooperative Patent Classification (CPC):
**G06N 3/0455**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.12.2022 US 202263477925 P**

(62) Document number(s) of the earlier application(s) in accordance with Art. 76 EPC:
**23848695.5 / 4 413 493**

(71) Applicant: **STATS LLC**
**Chicago, IL 60601 (US)**

(72) Inventors:
- **HORTON, Michael John**
  **Chicago, 60601 (US)**
- **LUCEY, Patrick Joseph**
  **Chicago, 60601 (US)**

(74) Representative: **Patel, Nikesh**
**Venner Shipley LLP**
**200 Aldersgate**
**London EC1A 4HD (GB)**

Remarks:
This application was filed on 08-01-2026 as a divisional application to the application mentioned under INID code 62.

(54) **SYSTEMS AND METHODS FOR A TRANSFORMER NEURAL NETWORK FOR PLAYER AND TEAM PREDICTIONS FOR SPORTS**

(57) A method for generating predictions for teams and players associated with a sporting event using a transformer neural network, the method including: receiving a set of input features, the set of input features representing a set of players and teams within a match, each input within the set of input features being represented by a tensor; inputting the set of input features into a transformer neural network, the transformer neural network including: a set of embedding layers; transformer encoder layers; and fully connected layers; and generating, using the transformer neural network, a set of target metric predictions for the set of players and teams within the match.

EP 4 700 650 A2

**Description**

**Cross-Reference to Related Applications**

This application claims the benefit of priority to U.S. Provisional Application Serial No. 63/477,925, filed December 30, 2022, which is hereby incorporated by reference in its entirety.

**Field of the Disclosure**

Various aspects of the present disclosure relate generally to machine learning for sports applications, in particular various aspects relate to a system and method for a transformer neural network for generating predictions for players and/or teams for a sporting event.

**Background**

With the rising popularity of sports, there is an increased desire for accurate granular predictions of what will occur during a sporting event. For example, predicting how the number of passes or shots that a particular soccer player (e.g., Lionel Messi) will have in the given game (e.g., World Cup final), both prior to and during the World Cup final, can be of particular interest to members of the media, broadcast (whether on the primary feed, or a second screen experience), sportsbook, and fantasy/gamification applications. Existing solutions are unable to accurately make such predictions. In particular, existing solutions may not adequately capture the correlations between team-mates, opposition, and other contextual features of a particular match. Hence, new solutions are needed.

Unless otherwise indicated herein, the materials described in this section are not prior art to the claims in this application and are not admitted to be prior art, or suggestions of the prior art, by inclusion in this section.

**Summary**

In some aspects, the techniques described herein relate to a method for generating predictions for teams and players associated with a sporting event using a transformer neural network, the method including: receiving a set of input features, the set of input features representing a set of players and teams within a match, each input within the set of input features being represented by a tensor; inputting the set of input features into a transformer neural network, the transformer neural network including: a set of embedding layers; transformer encoder layers; and fully connected layers; and generating, using the transformer neural network, a set of target metric predictions for the set of players and teams within the match.

In some aspects, the techniques described herein relate to a method, wherein each tensor within the set of input features corresponds to a grain level of a plurality of a grain levels, the grain level indicating that the tensor belongs to either a player-level, a team-frame-level, or a game-level category.

In some aspects, the techniques described herein relate to a method, wherein the set of input features includes: a first tensor of live player features indicating a player's position and team, and a running total of actions performed by a player in the set of players; a second tensor of player strength features indicating a player's aggregate statistics of the player's actions over a set of previous games; a third tensor of live team features indicating running totals of actions performed by a team of the set of teams within the match; a fourth tensor of team strength features indicating aggregated statistics of a team's aggregate statistics over the set of previous games; a fifth tensor of live game state features indicating attributes of the match including at least one of an event-type, a game-clock time, or event location; and a sixth tensor of game context features indicating a league in which the match is taking place and a time associated with the match.

In some aspects, the techniques described herein relate to a method, wherein inputting the set of input features into the transformer neural network further includes: mapping, using the set of embedding layers, the set of input features into a set of tensors with a common feature dimension, wherein the set of embedding layers includes a linear layer for each input of the set of input features.

In some aspects, the techniques described herein relate to a method, wherein inputting the set of input features into the transformer neural network further includes: the transformer encoder layers receiving the mapped set of tensors with common feature dimension from the set of embedding layers; and computing, using the transformer encoder layers, self-attention along temporal and agent dimensions to the mapped set of tensors with common feature dimensions to generate transformer encoder layer embeddings.

In some aspects, the techniques described herein relate to a method, wherein inputting the set of input features into the transformer neural network further includes: mapping, using the fully connected layers, the transformer encoder layer embeddings into tensors corresponding to target metrics.

In some aspects, the techniques described herein relate to a method, wherein creating a set of inputs features occurs automatically upon detection of the sporting event being scheduled.

In some aspects, the techniques described herein relate to a method, wherein a feature creator processing step initiates creation of the set of input features for the sporting event, upon querying data from a data platform.

In some aspects, the techniques described herein relate to a method, wherein the target metric predictions include: goals, assists, shots, shots on target, passes, fouls, yellow cards, red cards and/or minutes for one or more of the players.

In some aspects, the techniques described herein relate to a method, wherein the set of generated predictions for at least one action specific for each player or team associated with the sporting event is updated temporally during a match.

In some aspects, the techniques described herein relate to a system for generating predictions for teams and players associated with a sporting event using a transformer neural network, the system including: a non-transitory computer readable medium configured to store processor-readable instructions; and a processor operatively connected to the non-transitory computer readable medium, and configured to execute the instructions to perform operations including: receiving a set of input features, the set of input features representing a set of players and teams within a match, each input within the set of input features being represented by a tensor; inputting the set of input features into a transformer neural network, the transformer neural network including: a set of embedding layers; transformer encoder layers; and fully connected layers; and generating, using the transformer neural network, a set of target metric predictions for the set of players and teams within the match.

In some aspects, the techniques described herein relate to a system, wherein each tensor within the set of input features corresponds to a grain level of a plurality of a grain levels, the grain level indicating that the tensor belongs to either a player-level, a team-frame-level, or a game-level category.

In some aspects, the techniques described herein relate to a system, wherein the set of input features includes: a first tensor of live player features indicating a player's position and team, and a running total of actions performed by a player in the set of players; a second tensor of player strength features indicating a player's aggregate statistics of the player's actions over a set of previous games; a third tensor of live team features indicating running totals of actions performed by a team of the set of teams within the match; a fourth tensor of team strength features indicating aggregated statistics of a team's aggregate statistics over the set of previous games; a fifth tensor of live game state features indicating attributes of the match including at least one of an event-type, a game-clock time, or event location; and a sixth tensor of game context features indicating a league in which the match is taking place and a time associated with the match.

In some aspects, the techniques described herein relate to a system, wherein inputting the set of input features into the transformer neural network further includes: mapping, using the set of embedding layers, the set of input features into a set of tensors with a common feature dimension, wherein the set of embedding layers includes a linear layer for each input of the set of input features.

In some aspects, the techniques described herein relate to a system, wherein inputting the set of input features into the transformer neural network further includes: the transformer encoder layers receiving the mapped set of tensors with common feature dimension from the set of embedding layers; and computing, using the transformer encoder layers, self-attention along temporal and agent dimensions to the mapped set of tensors with common feature dimensions to generate transformer encoder layer embeddings.

In some aspects, the techniques described herein relate to a system, wherein inputting the set of input features into the transformer neural network further includes: mapping, using the fully connected layers, the transformer encoder layer embeddings into tensors corresponding to target metrics.

In some aspects, the techniques described herein relate to a system, wherein creating a set of inputs features occurs automatically upon detection of the sporting event being scheduled.

In some aspects, the techniques described herein relate to a system, wherein a feature creator processing step initiates creation of the set of input features for the sporting event, upon querying data from a data platform.

In some aspects, the techniques described herein relate to a system, wherein the target metric predictions include: goals, assists, shots, shots on target, passes, fouls, yellow cards, red cards and/or minutes for one or more of the players.

In some aspects, the techniques described herein relate to a system, wherein the set of generated predictions for at least one action specific for each player or team associated with the sporting event is updated temporally during a match.

In some aspects, the techniques described herein relate to a non-transitory computer readable medium for generating predictions for teams and players associated with a sporting event using a transformer neural network, the method including: receiving a set of input features, the set of input features representing a set of players and teams within a match, each input within the set of input features being represented by a tensor; inputting the set of input features into a transformer neural network, the transformer neural network including: a set of embedding layers; transformer encoder layers; and fully connected layers; and generating, using the transformer neural network, a set of target metric predictions for the set of players and teams within the match.

In some aspects, the techniques described herein relate to a non-transitory computer readable medium, wherein the target metric predictions include: goals, assists, shots, shots on target, passes, fouls, yellow cards, red cards and/or minutes for one or more of the players.

Additional objects and advantages of the disclosed aspects will be set forth in part in the description that follows, and in part will be apparent from the description, or may be learned by practice of the disclosed aspects. The objects and advantages of the disclosed aspects will be realized and attained by means of the elements and combinations particularly pointed out in the appended claims.

It is to be understood that both the foregoing general description and the following detailed description are exemplary and explanatory only and are not restrictive of the disclosed aspects, as claimed.

## Brief Description of the Drawings

The accompanying drawings, which are incorporated in and constitute a part of this specification, illustrate various exemplary aspects and together with the description, serve to explain the principles of the disclosed aspects.

FIG. 1 is a block diagram of an exemplary tracking and analytics environment, according to example embodiments.

FIG. 2A is an example correlation between input features and predicted distributions, according to example embodiments.

FIG. 2B is an illustration of a set of neural networks deriving predicted distributions for a set of input features, according to example embodiments.

FIG 3A is a transformer neural network for player and team predictions, according to example embodiments.

FIG. 3B is an exemplary model of the input tensors for the transformer neural network of FIG. 3A, according to example embodiments.

Fig. 3C is an exemplary model of the linear embedding layers, axial transfer encoder layers, and fully connected layers of the transformer neural network of FIG. 3A, according to example embodiments.

FIG. 3D is an exemplary model of the axial attention layer of the transformer neural network of FIG. 3A, according to example embodiments.

FIG. 4 is a flow process for an example top-down prediction model, according to example embodiments.

FIG. 5 is a flow process for an example top-down prediction model during an exemplary sporting match, according to example embodiments.

FIG. 6 is an exemplary graphical representation of a predicted statistic output from a transformer neural network throughout a sporting event, according to example embodiments.

FIG. 7 is an example flow process for a trigger processing step, according to example embodiments.

FIG. 8 is an example flow process for a feature creation processing step, according to example embodiments.

FIG. 9 is an example flow process of a prop predictor processing step, according to example embodiments.

FIG. 10 is an example flow process for a team prop predictor processing step, according to example embodiments.

FIG. 11 is an example flow process for a player prop predictor processing step, according to example embodiments.

FIG. 12 is an example flow process for a combine prop predictor processing step, according to example embodiments.

FIG. 13 is an example flow process for generating predictions for teams and players associated with a sporting event using a transformer neural network, according to an example embodiment.

FIG. 14 depicts a flow diagram for training a machine learning model, in accordance with an aspect.

FIG. 15 depicts an example of a computing device, in accordance with an aspect.

Notably, for simplicity and clarity of illustration, certain aspects of the figures depict the general configuration of the various embodiments. Descriptions and details of well-known features and techniques may be omitted to avoid unnecessarily obscuring other features. Elements in the figures are not necessarily drawn to scale; the dimensions of some features may be exaggerated relative to other elements to improve understanding of the example embodiments.

## Detailed Description

Various aspects of the present disclosure relate generally to machine learning for sports applications, in particular various aspects relate to a system and method for a transformer neural network for generating predictions for players and/or teams for a sporting event.

According to embodiments disclosed herein, a transformer neural network may receive inputs (e.g., tensor layers,), where each input corresponds to a given player, team, or game. The transformer neural network may output generated predictions for one or more given players or teams based on such inputs. More specifically, the transformer neural network may output such generated predictions for a given player or team based on inputs associated with that given player or team and further based on the influence of one or more other players or teams. Accordingly, predictions provided by a transformer neural network, as discussed herein, may account for the influence of multiple players and/or teams when outputting a prediction for a given player and/or team.

As used herein, a "machine learning model" generally encompasses instructions, data, and/or a model configured to receive input, and apply one or more of a weight, bias, classification, or analysis on the input to generate an output. The output may include, for example, a classification of the input, an analysis based on the input, a design, process, prediction, or recommendation associated with the input, or any other suitable type of output. A machine learning model is generally trained using training data, e.g., experiential data and/or samples of input data, which are fed into the model in order to establish, tune, or modify one or more aspects of the model, e.g., the weights, biases, criteria for forming classifications or clusters, or the like. Aspects of a machine learning model may operate on an input linearly, in parallel, via a network (e.g., a neural network), or via any suitable configuration.

The execution of the machine learning model may include deployment of one or more machine learning techniques, such as linear regression, logistic regression, random forest, gradient boosted machine (GBM), deep learning, and/or a deep neural network. Supervised and/or unsupervised training may be employed. For example, supervised learning may include providing training data and labels corresponding to the training data, e.g., as ground truth. Unsupervised approaches may include clustering, classification or the like. K-means clustering or K-Nearest Neighbors may also be used, which may be supervised or unsupervised. Combinations of K-Nearest Neighbors and an unsupervised cluster technique may also be used. Any suitable type of training may be used, e.g., stochastic, gradient boosted, random seeded, recursive, epoch or batch-based, etc.

While several of the examples herein involve certain types of machine learning, it should be understood that techniques according to this disclosure may be adapted to any suitable type of machine learning. It should also be understood that the examples above are illustrative only. The techniques and technologies of this disclosure may be adapted to any suitable activity.

While soccer and various aspects relating to soccer (e.g., a predicted total number of passes by a team during a game) are described in the present aspects as illustrative examples, the present aspects are not limited to such examples. For example, the present aspects can be implemented for other sports or activities, such as football, basketball, baseball, tennis, golf, cricket, rugby, and so forth.

Soccer is a game that can be viewed as a sequence of actions such as passes, shots, tackles, fouls, etc., that are carried out by the players for the respective teams. For a given player or team, predicting the total number of each such action that will occur during a match is useful for a variety of applications, such as: setting the starting lineup and substitutes; evaluating player and team performance; setting statistical odds for events to occur in a game; and supporting commentary and analysis for live broadcasts.

In many sports, however accurately predicting what is going to happen in a particular event (e.g., a soccer match) can be difficult due, in part, to the large number of variables involved. For example, a variety of factors can affect what is going to occur in an event. For example, predicting the performance of a particular player is difficult because the performance of a particular player is impacted based on the player's particular role, the opposition team's strategy and structure, the current game state (e.g., if a team is up 2-0, the team has a reduced need to attack, with more players moving into a defensive capacity), and the like. It will be understood that although the current game state is described above, a current game state may be implemented, determined, identified, and/or applied numerically or via a machine learning language (e.g., using weights, biases, layers, synapses, etc.).

The systems and methods described herein may describe a system configured to make one or more predictions for one or more of the players within a sporting event and/or for one or more teams. Further the predictions may pertain to several actions by each player (e.g., shots taken, passes taken, goals made, fouls committed, etc.). Moreover, these predictions may be live, in the sense that they will be updated as the match progress (e.g., in real-time or near real-time).

The actions that occur during a match (e.g., a game, a competition, a round, etc.) may be the product of a complex system of interactions between players and teams. The task of predicting the number of actions that will be performed by an individual player, over the duration of the match, has several considerations. An exemplary prediction may be predicting the total number of successful passes for a particular player at a particular point in time during a match. This prediction may be based on several factors, including, but not limited to: the number of passes already made by the player; the offensive strength of the player's teammates, and the strategy the team is performing; the defensive strength of the opposition team, and their strategy; the game state, (i.e. the current score, remaining time, sent-off players, etc.); the game context (i.e. the competition stage the game is player in such as whether the match is a final in a knock-out tournament, or an end-of-season game between two mid-table teams); and/or the likelihood that the player will be substituted, and at what time. It will be understood that a prediction may be based on one or more factors other than those exemplified above.

The systems and methods described herein may include a model that can capture the interactions between players, while incorporating team information, game-state, and/or game context factors. Thus, the system may be able to accept input features for a set of players, and jointly make predictions for each of the players based on the influence of each other player. The system may further receive multi-resolution inputs in a principled manner for: players; teams; game state and context; and/or features that denote the a-priori strength and playing style of each player and team. Predictions may be performed for all players who might play in the match (e.g., for a match-day squad containing the starting lineup, and any corresponding substitutes).

Furthermore, the systems and methods described herein may be consistent in the predictions made for different actions. In some cases this consistency may be direct. For example, the number of shots on target by a particular player may be no greater than the total shots made. In other cases the consistency output made by the system may be relatively more complex. For example, the total assists by all players in a team must be no greater than the total number of goals predicted for the team. Further, the methods and systems disclosed herein may output predictions by correlating actions across multiple players and/or multiple teams. For example, a team that is dominant may tend to make more passes and shots, and concede fewer fouls and yellow cards. Accordingly, a player based prediction may account for the team based dominant trends. The system described herein may make joint predictions on the game totals of all actions in a manner that is consistent by learning the correlations and patterns between the actions (e.g., player actions, team actions, etc.).

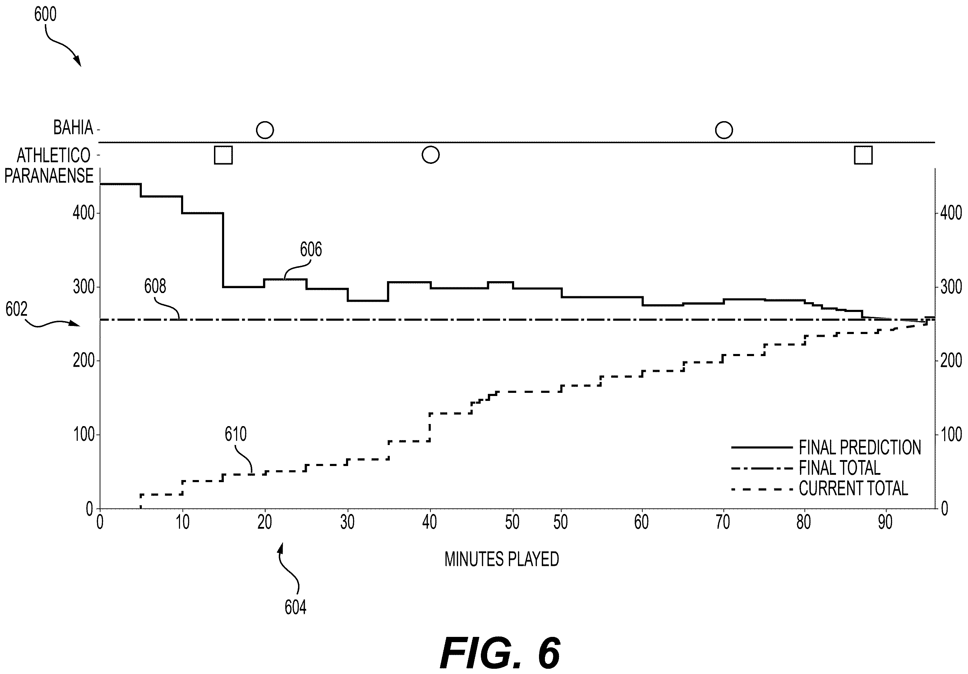

Further, the systems and methods described herein may be configured to update predictions live during a sporting event as the event progresses. Thus, predictions output by the system may be temporally consistent so that the predicted totals should never be less than the actual running totals, be smooth locally (e.g., with the exception of when significant events take place, such as goals), and converge to the actual totals at the end of the match (e.g., as depicted in FIG. 6). The system may further be configured to capture in-game dynamics, such as shifts in momentum, effects of goals, and/or player dismissals.

The system described herein may thus receive as input a set of features represented with no implicit ordering, where the features may be represented as player vectors, team vectors, and/or match day vectors. The system may further be configured to predict multiple separate actions that are consistent with one another. The predictions may further be sequential (e.g., updated throughout a game) and temporally consistent (e.g., updated as time passes through a game). Further, the system may be configured to capture in-game momentum and dynamics.

The system may include a transformer network described herein that may be configured to address the constraints described herein. The transformer network may include layers that alternate between temporally applying attention to sequences of action events, and applying attention spatially across the set of players and teams at each event time-step. The transformer neural network may include learned embeddings that are the output of the final transformer layer. These may be used to predict the total of each action for each player, using a single linear layer. Since each predicted action target for a particular player is thus an affine transformation of the same embedding, the consistency of the predictions for each action is maintained.

This transformer neural network architecture may be resource and/or time efficient. For example, the transformer neural network may not duplicate any feature in the input. The transformer neural network may make multiple predictions at each time-step. For example, the transformer neural network may predict totals for each of sixteen actions for all players in a match-day squad, and for each of the two teams, up to 672 predictions per time-step, where predictions are made temporally approximately 1000 time per match.

Further, in sports, a "generative AI" approach may not only provide predictions of what is occurring during the game, but it can also be used to accurately predict "what-if" questions (e.g., if a player was substituted off with another player, or a formation change was made) to determine how that proposed change would not only affect the outcome at the game level but also the player level. Such analysis can be used by coaches (as an assistive aid), or media, sports books, and/or fantasy platforms that can prepare for changes (e.g., if they see a substitution or during a VAR or another break).

In many instances, transformer networks have been successfully used for various data inputs. For example, for text, GPT-3 and ChatGPT are examples of how these generative AI models can generate text outputs when prompted. Similarly for images, Dalle-2 and Stable Diffusion can generate images/art-work from a text input.

For a sport, at the match-level, the present embodiments can use generative AI and/or transformer networks to generate predictions for one or more actions for the sporting event. In some instances, the present systems and method can obtain a query, a "what-if" or prediction question, such as predicting how many shots, goals, passes a specific player or combination of players have. The present embodiments can utilize a transformer network using players as essentially the words in an NLP analogy and a self-attention mechanism to determine the interactions between players (rather than predicting each player independently).

The present embodiments provide a fusion of both the top-down prediction model (e.g., a feed forward neural network) which can use historical team and market information to accurately predict the team outputs for the game (e.g., goals, shots, shots-on-target, assists, passes, fouls, yellow-cards, red-cards), as well as a transformer neural network model, which can provide predictions for individual players, which captures the player-to-player interactions both within-team and the opponents.

By using the transformer network architecture, the present systems can capture the inter/intra player relationships. However, in many cases, a bottom-up approach may not align with the team total predictions, which tend to be reasonably "efficient," as they can leverage market information (such as for sportsbooks). By utilizing the team predictions using a top-down approach, while ensuring that the team totals align with markets, the present systems can assign outputs predictions for each player for increased accuracy by utilizing a graph neural network (GNN) (or a "bottom-up" representation) model. Using the transformer network architecture alone, the present systems can capture inter/intra player relationships. However, in many cases, a bottom-up approach alone may not align with the team total predictions, which tend to be reasonably "efficient," as they can leverage market information (such as sportsbook markets). By utilizing the team predictions using a top-down approach, the system can ensure that the individual player predictions align with the market predictions. In other words, the system can utilize the prediction generated by the top-down model to normalize the predictions generated by the bottom-up model.

The transformer neural network described herein may be configured to make simultaneous predictions for one or more players or teams. By performing the predictions simultaneously, the predictions may be more accurate relative to non-simultaneous predictions.

The execution of the machine learning model may include deployment of one or more machine learning techniques, such as linear regression, logistic regression, random forest, gradient boosted machine (GBM), deep learning, and/or a deep neural network. Supervised and/or unsupervised training may be employed. For example, supervised learning may include providing training data and labels corresponding to the training data, e.g., as ground truth. Unsupervised approaches may include clustering, classification or the like. K-means clustering or K-Nearest Neighbors may also be used, which may be supervised or unsupervised. Combinations of K-Nearest Neighbors and an unsupervised cluster technique may also be used. Any suitable type of training may be used, e.g., stochastic, gradient boosted, random seeded, recursive, epoch or batch-based, etc.

While several of the examples herein involve certain types of machine learning, it should be understood that techniques according to this disclosure may be adapted to any suitable type of machine learning. It should also be understood that the examples above are illustrative only. The techniques and technologies of this disclosure may be adapted to any suitable activity.

Further, while various aspects are discussed with respect to a given sport, such aspects are described are merely illustrative examples. Disclosed techniques are by no means limited to any specific sport. For example, the present aspects can be implemented for other sports or activities, such as soccer, football (i.e., American football), basketball, baseball, hockey, cricket, rugby, tennis, and so forth.

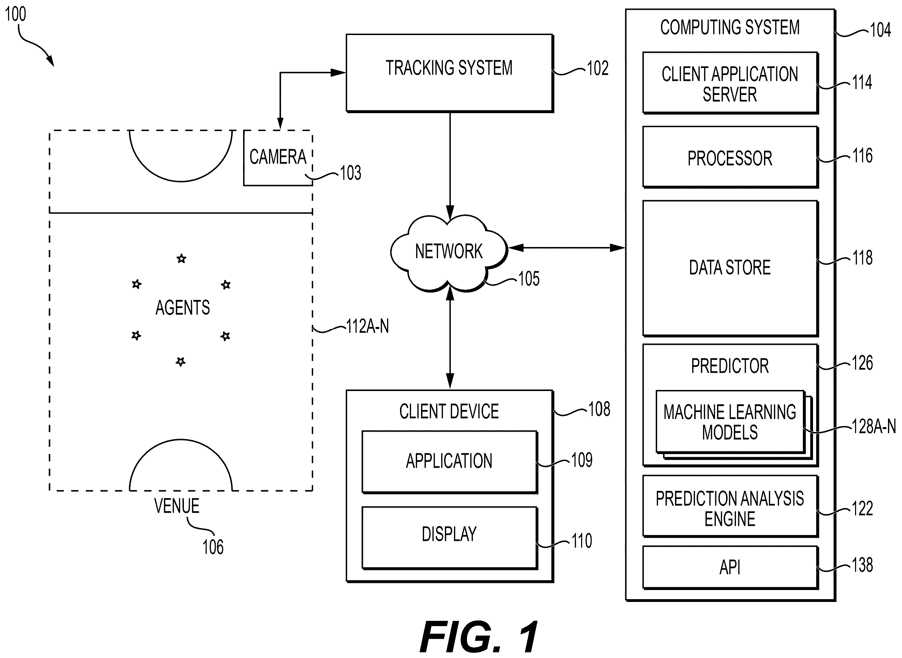

FIG. 1 is a block diagram illustrating a computing environment 100, according to example aspects of the disclosed subject matter. Environment 100 includes tracking system 102, computing system 104, and client device 108 connected via network 105. In the example depicted, tracking system 102 obtains various measurements of game play, and transmits the measurements across network 105 to computing system 104, where the measurements can be used in conjunction with one or more machine learning models. In an example, the one or more machine learning models described herein may be configured to receive as input embeddings of players, teams, and/or match info and to determine one or more predictions for the players and/or teams.

Tracking system 102 may be in communication with and/or may be positioned in, adjacent to, or near a venue 106. Non-limiting examples of venue 106 include stadiums, fields, pitches, and courts. Venue 106 includes agents 112A-N (players). Tracking system 102 may be configured to record the motions and actions of agents 112A-N on the playing surface, as well as one or more other objects of relevance (e.g., ball, referees, etc.). Although environment 100 depicts agents 112A-N generally as players, it will be understood that in accordance with certain implementations, agents 112A-N may correspond to players, officials, coaches, objects, markers, and/or the like.

In some aspects, tracking system 102 may be an optically-based system using, for example, using camera 103. While one camera is depicted, additional cameras are possible. For example, a system of six stationary, calibrated cameras, which project the three-dimensional locations of players and the ball onto a two-dimensional overhead view of the court may be used.

In another example, a mix of stationary and non-stationary cameras may be used to capture motions of all agents 112A-N on the playing surface as well as one or more objects or relevance. Utilization of such tracking system (e.g., tracking system 102) may result in many different camera views of the court (e.g., high sideline view, free-throw line view, huddle view, face-off view, end zone view, etc.). In some aspects, tracking system 102 correspond to or use a broadcast feed of a given match. In such aspects, each frame of the broadcast feed may be stored in a game file.

Tracking system 102 may be configured to communicate with computing system 104 via network 105. Computing system 104 may be configured to manage and analyze the data captured by tracking system 102. Computing system 104 may include a web client application server 114, a pre-processing agent 116 (e.g., a processor and/or preprocessor), a data store 118, and a third-party Application Programming Interface (API) 138. An example of computing system 104 is depicted with respect to FIG. 1500.

Pre-processing agent 116 may be configured to process data retrieved from data store 118 or tracking system 102 prior to input to predictor 126. The pre-processing agent 116, predictor, and/or prediction model analysis engine 122 may be comprised of one or more software modules. The one or more software modules may be collections of code or instructions stored on a media (e.g., memory of organization computing system 104) that represent a series of machine instructions (e.g., program code) that implements one or more algorithmic steps. Such machine instructions may be the actual computer code the processor of organization computing system 104 interprets to implement the instructions or, alternatively, may be a higher level of coding of the instructions that is interpreted to obtain the actual computer code. The one or more software modules may also include one or more hardware components. One or more aspects of an example algorithm may be performed by the hardware components (e.g., circuitry) itself, rather as a result of the instructions.

Data store 118 may be configured to store different kinds of data. In an example, data store 118 can store raw tracking data received from tracking system 102. The data store 118 can include historical game data, live data, features, and/or predictions. The historical game data can include historical team and player data for one or more sporting events. Live data can include data received from tracking system 102, e.g., in real time or near real time. Gama data may include broadcast data or content related to a game (e.g., a match, a competition, a round, etc.) and/or may include tracking data generated by tracking system 102 or in response to data generated by tracking system 102. Data store 118 may be configured to store features (e.g., feature vectors) generated for a specific sporting event that incorporate player, team, and match features.

According to aspects disclosed herein, data store 118 may receive and/or store a game file. A game file may include one or more game data types. A game data type may include, but is not limited to, position data (e.g., player position, object position, etc.) change data (e.g., changes in position, changes in players, changes in objects, etc.), trend data (e.g., player trends, position trends, object trends, team trends, etc.), play data, etc. A game file may be a single game file or may be segmented (e.g., grouped by one or more data type, grouped by one or more players, grouped by one or more teams, etc.). Pre-processing agent 116 and/or data store 118 may be operated (e.g., using applicable code) to receive tracking data in a first format, store game files in a second format, and/or output game data (e.g., to predictor 126) in a third format. For example, pre-processing agent 116 may receive an intended destination for game data (or data stored in data store 118 in general) and may format the data into a format acceptable by the intended destination.

Predictor 126 includes one or more machine-learning models 128A-N. Examples include a transformer neural network, a graphical neural network, a recurrent neural network, a convolutional neural network, and/or a feed forward neural network. Predictor 126 may include a system that can implement a series of neural network instances (e.g., feed forward network (FFN) models) connected via a transformer neural network (e.g., a graph neural network (GNN) model). An FFN may be a network for which flow is uni-directional such that information in the model flows in in a forward direction from the input nodes or layers, through hidden nodes or layers, and to output nodes or layers (e.g., without any cycles or loops). An FFN may be trained using a backpropagation technique to iteratively train a model by calculating necessary parameter adjustments to gradually minimize error. A GNN may capture dependence of graphs (e.g., their respective nodes and edges) via message passing between nodes of one or more graphs.

Each neural network instance can be configured to generate prediction(s) for one or more actions for each player or team during a match. Further, the neural network instances can forward feature vector information or generated predictions to a transformer neural network to pass such information between neural network instances. The transmission of information across neural network instances can allow for player to player interactions to be accounted for in predictions, which can improve accuracy of predictions as described herein.

The machine learning models 128A-N may include a top-down model for generating team predictions for a sporting event. The top-down model can be fed features for the sporting event and/or other information, such as third-party predictions (e.g., provided by third-party application programming interface (API) 138). The top-down model can implement a feed forward neural network or another similar machine learning algorithm.

The machine learning models 128A-N may include a bottom-up model for generating player predictions for the sporting event. The bottom-up model can be fed the team predictions and/or the features for the sporting event in generating the player predictions. The bottom-up model can implement a transformational neural network or another similar machine learning algorithm, such as a graph neural network (GNN), for example. The bottom up model (e.g., the transformer) may be configured to receive outputs from the top down model. The bottom up may utilized the top-down model outputs as an input.

Client device 108 may be in communication with computing system 104 via network 105. Client device 108 may be operated by a user. For example, client device 108 may be a mobile device, a tablet, a desktop computer, or any computing system having the capabilities described herein. Users may include, but are not limited to, individuals such as, for example, subscribers, clients, prospective clients, or customers of an entity associated with computing system 104, such as individuals who have obtained, will obtain, or may obtain a product, service, or consultation from an entity associated with computing system 104.

Client device 108 may include one more applications 109. Application 109 may be representative of a web browser that allows access to a website or a stand-alone application. Client device 108 may access application 109 to access one or more functionalities of computing system 104. Client device 108 may communicate over network 105 to request a webpage, for example, from web client application server 114 of computing system 104. For example, client device 108 may be configured to execute application 109 to access content managed by web client application server 114. The content that is displayed to client device 108 may be transmitted from web client application server 114 to client device 108, and subsequently processed by application 109 for display through a graphical user interface (GUI) of client device 108.

Client device may include display 110. Examples of display 110 include, but are not limited to, computer displays, Light Emitting Diode (LED) displays, and so forth. Output or visualizations generated by application 109 (e.g., a GUI) can be displayed on or using display 110.

Functionality of sub-components illustrated within computing system 104 can be implemented in hardware, software, or some combination thereof. For example, software components may be collections of code or instructions stored on a media such as a non-transitory computer-readable medium (e.g., memory of computing system 104) that represent a series of machine instructions (e.g., program code) that implements one or more method operations. Such machine instructions may be the actual computer code the processor of computing system 104 interprets to implement the instructions or, alternatively, may be a higher level of coding of the instructions that is interpreted to obtain the actual computer code. The one or more software modules may also include one or more hardware components. Examples of components include processors, controllers, signal processors, neural network processors, and so forth.

Network 105 may be of any suitable type, including individual connections via the Internet, such as cellular or Wi-Fi networks. In some aspects, network 105 may connect terminals, services, and mobile devices using direct connections, such as radio frequency identification (RFID), near-field communication (NFC), Bluetooth™, low-energy Bluetooth™ (BLE), Wi-Fi™, ZigBee™, ambient backscatter communication (ABC) protocols, USB, WAN, or LAN. Because the information transmitted may be personal or confidential, security concerns may dictate one or more of these types of connection be encrypted or otherwise secured. In some aspects, however, the information being transmitted may be less personal, and therefore, the network connections may be selected for convenience over security.

Network 105 may include any type of computer networking arrangement used to exchange data or information. For example, network 105 may be the Internet, a private data network, virtual private network using a public network and/or other suitable connection(s) that enables components in computing environment 100 to send and receive information between the components of environment 100.

**Transformer Neural Network for Player and Team Prediction in Soccer**

Conventional systems may utilize machines learning model to make player and team predictions by utilizing market data. An issue with only using market data is that player (and intra-player interactions) and style-specific data may not be incorporated to make accurate predictions based on other influences in addition to those for a given player. Market data may refer to statistical odds for particular teams to win, score, the total points of a game, etc. Further, market data may not account for cross relationships between sets of players or across multiple teams.

The present embodiments generally provide a transformer machine learning model and associated data feeds that receive data from multiple machine learning instances across sporting events to generate live outputs. The transformer machine learning model can be implemented using a transformer network hierarchy that includes a GNN that connects multiple models (e.g., feed forward neural networks) generating predictions for each player and team for a specific sporting event (e.g., a soccer match).

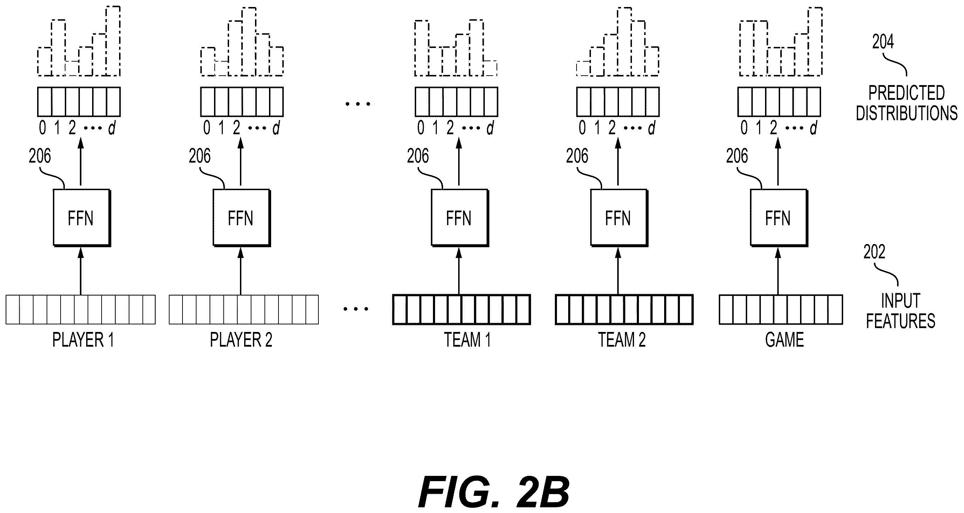

Further, predictions made by conventional system may not adequately capture correlations between team-mates, opposing teams and players, and other contextual features (e.g., as depicted in FIG. 2B below). Conventional systems including isolated models can make substantially more model calls for a sporting event than a system incorporating a machine learning model hierarchy as described herein.

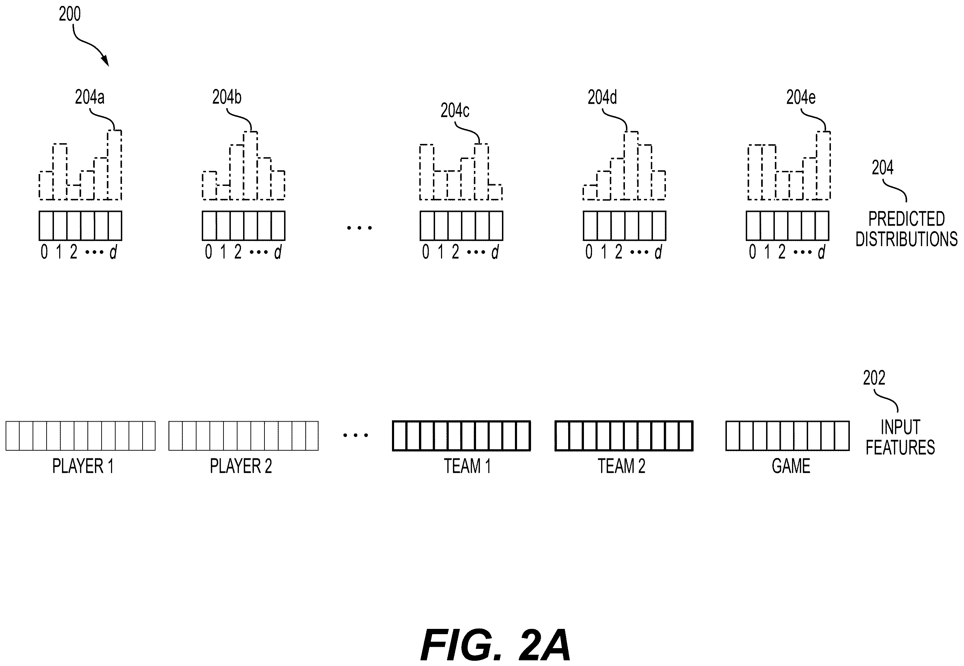

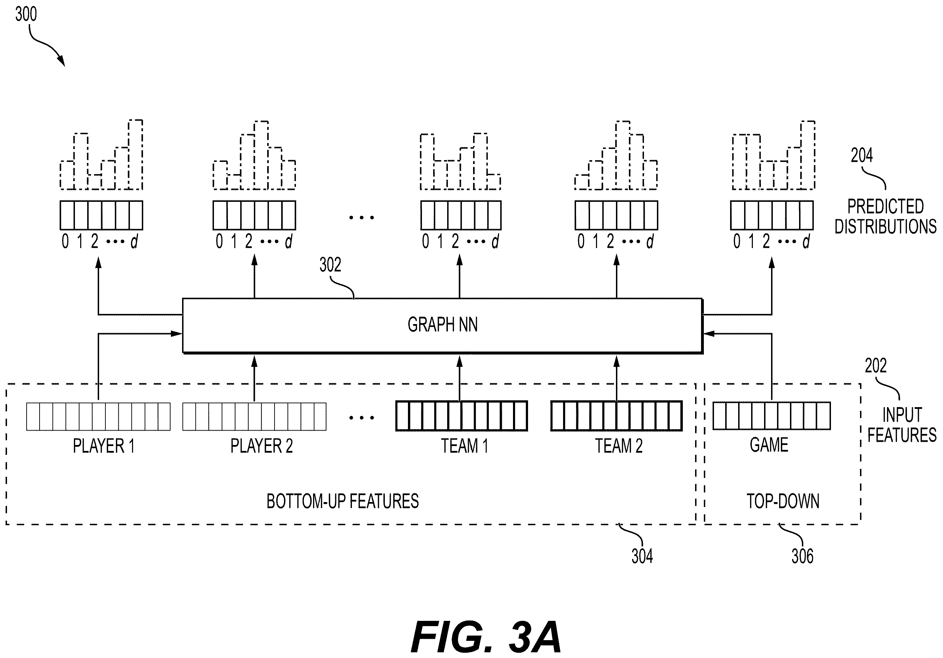

FIG. 2A is a diagram 200 that depicts example correlations between input features 202 and predicted distributions 204, according to example embodiments. The input features of FIG. 2A may be configured to be input into the transformer-based neural network 302 of FIG. 3A. Predicted distributions 204 may be outputs of the transformer-based neural network 302 of FIG. 3A.

The input features 202 may include features specific for the players, teams, and the game. For example, game features can include crowd size, venue capacity, weather conditions, point in season, team records against each other, etc. Team features can include recent form, days since last game, ranking or position, coach information, team makeup, injury information, substitution information, etc. Player features can include physiological features, recent form, player statistics, player attributes (e.g., height, weight, age, etc.), player trends, player preferences, etc. Further, input features 202 can also include in-game data, such as the current game statistics, player performance, substitutions, and/or time remaining in the match. Input features 202 may for example be input into a transformer neural network as a tuple of input tensors. For example, a tuple of three tensors may be provided where the first tensor corresponds to all players in a match, a second tensor corresponds to both teams in the match, and the a tensor corresponds to a match state. A given tensor may be composed by stacking single dimensional vectors (e.g., one-dimensional tensors such as a player tensor, team sensor, match sensor, etc.) to form a two dimensional tensor. Predicted distributions 204 may correspond to predictions of each player and team for the match. Each predicted distribution 204 (e.g., distribution 204a, 204b, 204c, 204c, 204e) may correspond to a prediction for a particular player or team). There may, for example, be a predicted distribution for each player and team in a match. For example, the prediction may be an empirical estimate of distributions for sport statistics such as number of shots taken, number of goals, number of passes, etc. The output can include an estimate of distribution for a random variable on the number of shots. The predicted distributions 204 may, for example, be output as a learned embedding through a tuple including a tensor.

FIG. 2B is an illustration of a set of neural networks (e.g., feed forward network (FFN) 206) deriving predicted distributions 204 for a set of input features 202, according to example embodiments.

In some instances, a neural network can be assigned to each player and team. FIG. 2B is an illustration of a neural network deriving predicted distribution from the input features for each player, team, and the game. As shown in FIG. 2B, each input feature 202 can be specific to a player, team, or the game. Further, a neural network (e.g., feed forward network (FFN) 206) can be assigned to each player, team, and the game to predict an action (e.g., a number of shots taken during the game) for each corresponding player, team, etc. However, such an architecture with a FFN assigned to each individual player and team may not interact with one another. This can prevent interactions between models, which may not capture interactions between players that are part of the same team. The system described in FIG. 3A-3D may overcome these issues.

As described in FIG. 3A-3D below, a neural network layer can connect to each of a plurality of individual models (e.g., instances) to capture the interactions between players and teams. Such a neural network hierarchy can include a graph neural network (GNN)configured to predict one or more actions for each player, team, game. and/or the like. In comparison to the distributed neural network shown in FIG. 2B, the neural network of FIG. 3A may replace the distributed FFN models such that all predictions are made jointly by the neural network (e.g., GNN neural network) of FIG. 3A. As a specific example, a transformer neural network may be used to output predictions related to a sporting event. Although a transformer neural network is generally discussed herein, it will be understood that any applicable GNN, or other neural network that may utilize graphical interpretations, may be used to perform the techniques discussed herein in reference to a transformer neural network. As discussed herein, a "graph" may refer to a network of nodes and their respective edges. . The transformer neural network may be configured to pass information (e.g., feature vectors, predictions) between the network nodes such as those representing and/or assigned to each player, team, or the like state, to enhance predictions made by each model to account for match context and player interactions. The GNN may be configured to include self-attention, which can allow the inputs to interact with each other ("self") and determine who or which node they should attend to ("attention"). The GNN may be fully-connected (e.g., there may be an edge between every pair of nodes) and the self-attention mechanism may be configured pass messages between pairs of connected nodes so that they may update their state. Once the node states have been updated by the mechanisms described herein, simultaneous predictions may be made for each node. For example, predicted market-data determined from a separate system may be input into the transformer neural network described herein. The output of the transformer neural network may include aggregates of interactions, including interactions related to the predicted market data.

In some instances, the models may obtain third party (or market) data providing predictions made by third-party sources. The models may also obtain other top-down data, such as league embedding data, referee embedding data, etc. This third party data may be output from a separate neural network system. This market-data may be input as an embedding into the transformer neural network described herein.

Further, a transformer neural network can be used to model and predict player to player interactions for a sporting event. As noted above, for each sporting event, the players on a same team and players opposing the team can significantly change a predicted performance of a given player. For example, if a player is scheduled to play against a strong defensive team, the number of passes for a player may be predicted to be lower than an overall average number of passes for the player. The transformer-based neural network can use the team-level features and can regularize what the total predictions can be.

In some instances, an input to the machine learning hierarchy as described herein can include a proposed modification of one or more aspects of the sporting event. For example, a request can include a proposal to replace a first player with a second player in a lineup for a soccer match. The machine learning hierarchy as described herein can incorporate one or more natural language processing (NLP) techniques to parse the query and update the features to account for the proposed change. For example, a network node in a graph neural network can be assigned to each player and team for the soccer match. Predictions can be made for each player and team, and a graph neural network can facilitate interactions between each feed forward neural network to better account for player interactions and other match context for the sporting event.

For example, a task can be to predict a total number of shots that will be taken for each player and team, either prior to the start of a sporting event or during the duration of the sporting event. A series of input features can be taken and processed to derive predicted distributions for each player and team predicting the shots taken.

FIG 3A includes an exemplary transformer-based neural network 302 for player and team predictions, according to example embodiments.

As shown in FIG. 3A, input features 202 can be separated into bottom-up features 304 and top-down features 306. The bottom-up features 304 can include features (or feature vectors) for each player and team, while the top-down features 306 can be match specific features (or feature vectors). The bottom-up features 304 and top-down features 306 may for example be formatted as tensors, which can be defined as a multidimensional array of data. The tensors may be organized within a tuple. Exemplary tensors within the tuple may be related to player feature vectors, player strength features, team features, team strength features, live game features, and game context features. These input features may be described in greater detail below.

The input features 202 can be fed into each node in the transformer network 302 corresponding to each player, team, and the game to allow for interaction between nodes. Each node contained in the GNN (e.g., the transformer-based neural network 302), can derive predicted distributions 204 for the corresponding player or team. The nodes can take player interactions and other prediction data generated by other nodes to enhance predictions made by each node.

As described above, the GNN can allow for nodes to interact with one another. These interactions can be modelled similarly to language modelling, understanding the meaning of a word in a sentence. In this example, language modelling can use the meaning of the word itself and the context provided by the other words in the sentence. A model can be used to learn, for each word, what other words to attend to in the sentence.

The transformer-based neural network 302 can process the input features to derive predicted distributions 204 for each player, team, and the game. As an example, the predicted distributions 204 can include a predicted total number of passes by each player for each team, and a total number of passes by each team during the game.

In some instances, the transformer-based neural network 302 can make a variety (e.g., 16 types) of predictions. For each player and each team, example predictions provided as outputs of the transformer-based neural network 302 can include predicted goals, assists, shots, shots on target, passes, fouls, yellow cards, red cards and minutes (player only), etc. Further, the model call can make a plurality (e.g., ~350) of predictions at a given time. Features can include historic features for a game, teams, players, referees, and in-game (e.g., event counts) features for teams and players.

In some embodiments, the player outputs generated by bottom-up model 300 can be normalized by the total team predictions outputs generated by the top-down model (e.g., by the top-down features 306). For example, if an aggregate number of predicted number of passes by each player of a team is 300, but the predicted number of passes by the team is only 280, the predicted number of passes for the players can be normalized to match the team total of 280.

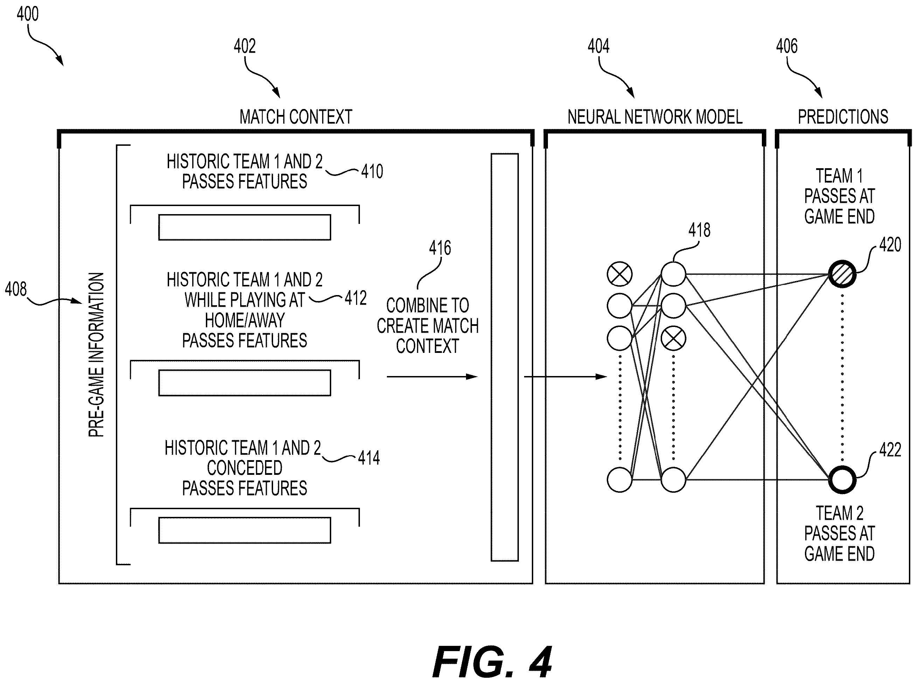

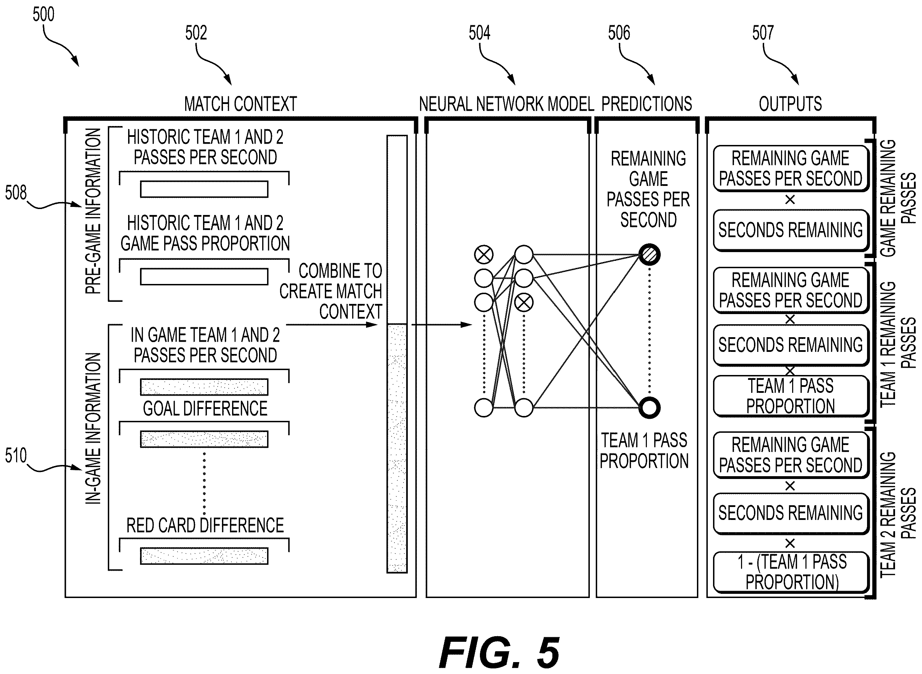

Top-down features 306 may, for example, be output from a separate machine learning system (e.g., model 404 as depicted in FIG. 4 or top-down prediction model 504 as depicted in FIG. 5). In another example, top-down features 306 may be extracted from market information (e.g., as sports odds) or game context information and/or may be directly determined by an individual or non-machine learning system. Top-down features 306 may be input into the transformer-based neural network 302, as further discussed herein. Top-down features 306 may be received via a feed (e.g., an API connected to a separate system) or input via an interface that a user may access. Top-down features 306 may align overall team-total statistics to information that is not present in historical data (e.g., such as information provided, at least in part, by bottom-up features 304). Top-down features 306 may work as a wrapper or interactive layer on-top of the transformer-based neural network 302.

Accordingly, top-down features 306 may include one or more of outputs from one or more machine learning models (e.g., a neural network that outputs team-level predictions) based match predictions (e.g., goals, shots, shots-on-target, assists, passes, fouls, yellow-cards, and/or red-cards, etc.), market information, and/or game context information. Such top-down features may be provided prior to a given sports event (e.g., based on pre-game data) and/or may be provided in-play (e.g., data based on an action, event, situation, status or the like that occurs during the occurrence of the sports event) and may be updated throughout the given sports event. For example, top-down features may be provided in-play based on actions or events that occur during the sports event. Such in-play top-down features may be provided chronically (e.g., upon expiration of a predetermined or dynamically determined time period) and/or may be provided upon the occurrence of a trigger top-down condition. A dynamically determined time period may be a period that adjusts, for example, based on a duration of time expired or a given in-play time. For example, in-play top-down features may be provided at a lower frequency during the middle of a given sporting event in comparison to a higher frequency temporally proximate to the end of a sporting event. A trigger top-down condition may be an action or event that occurs during in-play (e.g., a score, a timeout, a penalty, a change in possession, a substitution, etc.). Top-down features 306 may be used to augment, update, and/or replace prior inputs to and/or prior predictions made by transformer-based neural network 302, in real-time or near real-time.

As used herein, market information may refer to sports odds for a sporting event or may be based on sports odds. Such sports odds may rely on market liquidity and/or may tend to be efficient for main markets (e.g., for team totals). Such sports odds may include the probability of a given outcome (e.g., an action), where the outcome may be a binary outcome (e.g., a win or loss), an occurrence amount (e.g., a score), an occurrence (e.g., a hole-in-one), and/or the like. Market information may be generated (e.g., based on historical data), may be provided by an individual (e.g., via user input using an interface or via an API), and/or may be provided by one or more entities, automated systems, or individuals. According to an example, market information may be provided by multiple entities providing multiple input data points which may be used by transformer-based neural network 302 to output one or more predictions. Alternatively, market information provided by multiple entities may be filtered or normalized (e.g., averaged, weighted and averaged, transformed, etc.) and such filtered or normalized market information may be provided as top-down features 306 to transformer-based neural network 302.

As used herein, game context information may refer to information related to a sporting event. Such game context information may be generated by or provided by an expert, an expert system, and/or a specialized system. For example, such game context information may include one or more of ambient conditions (e.g., weather conditions, environmental conditions, etc.), player information (e.g., injury information, mindset information, training information, travel information, health information, etc.), expert predictions (e.g., team-level predictions, player level predictions, etc.), crowd information (e.g., crowd density, crowd volume, crowd excitement levels, crowd demographics, etc.), and/or the like. Game context information may be provided by an individual (e.g., via user input using an interface or via an API), and/or may be provided by one or more entities, automated systems, or individuals.

The transformer-based neural network 302 may accept input features 202 at different resolutions, and over a time-series. The transformer-based neural network 302 may use a single transformer encoder backbone to learn an embedding that is configured to make predictions on multiple actions for each agent (e.g., each player and/or team). The transformer-based neural network 302 backbone may be a series of axial transformer encoder layers, where each layer alternatively applies attention along the temporal and agent dimensions.

An exemplary objective of the transformer-based neural network 302 may be to predict the end-of-match total for various actions for all involved players in a sporting match at a time-step $t$. Each target may be a discrete random variable $Y$ $a,,$ where $a$ is the action predicted and $p$ is the player. These targets may correspond to the predicted distributions 204 of the transformer-based neural network 302. According to an embodiment, the transformer-based neural network 302 may be configured to not predict the joint distribution of all targets received as input. For example, the model may not predict: $P(Y)$ : $Y = \{Ya,p \,|\, a \in A, p \in P\}$, where A is the set of actions, and P is the set of players. The model may not predict this as for twenty two players and sixteen actions, the space of possible outcomes would be at least $2^{(22 \times 16)}$, may not be tractable.

The transformer-based neural network 302 may have been trained to predict the marginal distributions for each target. The model may utilize the function of: $P(Y\,a,p) = \Sigma_{Y \setminus Ya,p} P(Y)$ where $Y \setminus Ya,p$ represents the set of all targets except $Ya,p$. This may allow the transformer-based neural network 302 to approximate the joint distribution, and use this approximation to determine the marginal distributions for each target. This may ensure consistency between the distributions for each target.

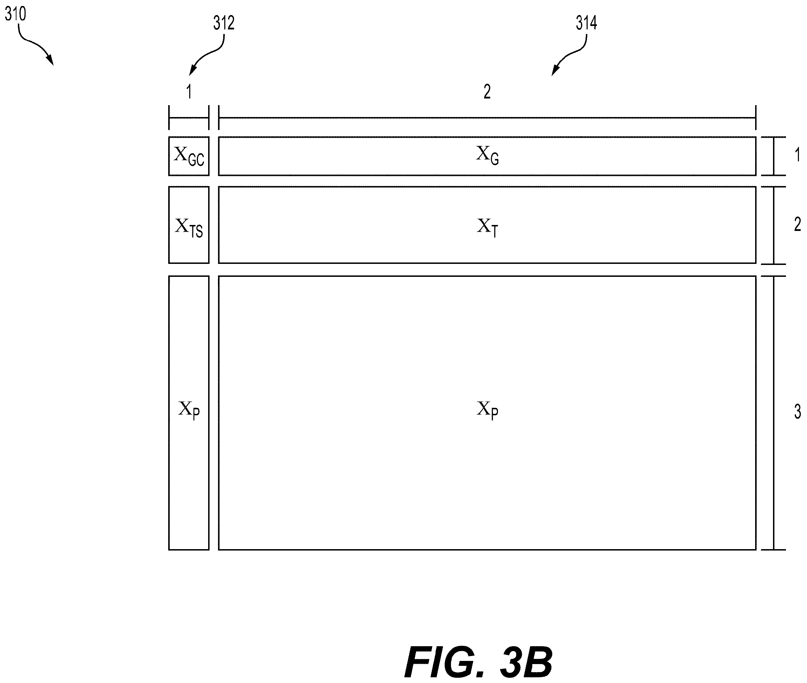

FIG. 3B is an exemplary model of the input tensors for the transformer-based neural network 302 of FIG. 3A, according to example embodiments. The input tensors of FIG. 3B may correspond to the input features 202 of FIG. 2A and FIG. 3A.

The transformer-based neural network 302 is trained on a set of training examples X, where N = |X| is the number of training examples. The granularity of each training example is a single match, and for each match i, there are $T^{(i)}$ time-steps where an action event occurs. There are also $P^{(i)}$ players in the match-day squad, and two teams for match i.

Each training example may be a tuple $(X^{(i)}, Y^{(i)})$, where $X^{(i)}$, is a tuple of input tensors, and $Y^{(i)}$ is the tuple of target tensors for match i.

The input tuple may contain the following tensors:

$$X^{(i)}_{player} \in R^{T^{(i)} x P^{(i)} x D_{player}}$$ is the tensor of live player features, where D$_{players}$ is the dimension of the player feature vectors. The features are for $X^{(i)}_{player}$ contains indicator features for the player's position and team, and running total of the actions already made by the player. $$X^{(i)}_{player-strength} \in R^{P^{(i)} x D_{player-strength}}$$ is the tensor of player strength features, where D$_{player-strength}$ is the dimension of the player strength feature vectors. The player strength features may be configured to capture the a-priori strength of the player, and are primarily aggregate statistics of the player's action in previous games, such as, for example, the mean number of passes in the previous 5 games, the maximum fouls conceded in the previous ten games, etc. In addition, there are features for the time since the previous match, distance from the player's home ground, and distance from the pervious match location. $$X^{(i)}_{team} \in R^{T^{(i)} x 2 x D_{team}}$$ is the tensor of live team features, where D$_{team}$ is the dimension of the team *feature* vectors. The features for $X^{(i)}_{team}$ contain indicator features for the team, and running totals of the actions already made by t the team, similar to the live player features.

$$X^{(i)}_{team-strength} \in R^{2 x D_{team-strength}}$$ is the tensor of team strength features, where D$_{team-strength}$ is the dimension of the team strength feature vectors. The team strength features are primarily aggregate statistics of the team's action in previous games, similar to the player strength features. $$X^{(i)}_{game} \in R^{T^{(i)} x D_{game}}$$ is the tensor of live game state features, where the feature vector is of dimension D$_{game}$. The game state feature contains attributes of the current event, such as the event-type, the game-clock time, and the event location. $X_{game-context}^{(i)} \in R^{D_{game-context}}$ is the game context features vector of dimensions $D_{game-context}$. The event context features capture the context in which the game is played, such as indicator features for the competition (such as what league the game is played in), the hour the game is played in, etc.

Each of the input tensors $X^{(i)}$ described above may correspond to input features 202 of FIG. 3A.

The input tensors $X^{(i)}$, may be arranged along the time and agent dimensions according to the arrangement of FIG. 3B. The columns may represent the agent (e.g., the player, team, and match respective tensors), and rows may represent the temporal aspect of a match. Column 312 represents the initial input of the tensors described above. Column 314 depicts how the input tensors are provided temporally throughout a game.

Examining the input of the transformer-based neural network 302 (e.g., the input tensors $X^{(i)}$) the features are not duplicated. Each feature provided as input through tensors $X^{(i)}$, can be categorized by their grain. The grain may for example be (1) player-level, (2) team-frame-level, and/or (3) game level. Each grain may be represented by a tensor within the tuple received by the transformer neural network. . The transformer-based neural network 302 may rely on attention to learn which features at each grain are relevant to predictions at other grains (e.g., how important the current game state is to a prediction for a particular player).

The target tuple $Y^{(i)}$, contains tensors for each of the modelled actions for each player and/or team. For a given action $a$, the target tensor contains the remaining number of actions for each player in a tensor $Y_a^{(i)} \in R^{T^{(i)} x P^{(i)}}$. For example, $a$ may represent the number of shots, the for time-step $\in [1, T^{(i)}]$, and player $p \in [1, p^{(i)}]$, , $Y_a^{(i)}$ may represent the number of shots remaining for player $p$ at time-step 5. The count of remaining actions may be utilized as ground-truth, rather than the total number, since his may facilitate making distributional assumptions, in particular using a Poisson distribution to model the remaining actions in the interval $[t, T^{(i)}]$. The target tuple $Y^{(i)}$ may be utilized for training, whereas a tuple $Y^{(i)}$, may correspond to the predicted distributions 204 of the transformer-based neural network 302.

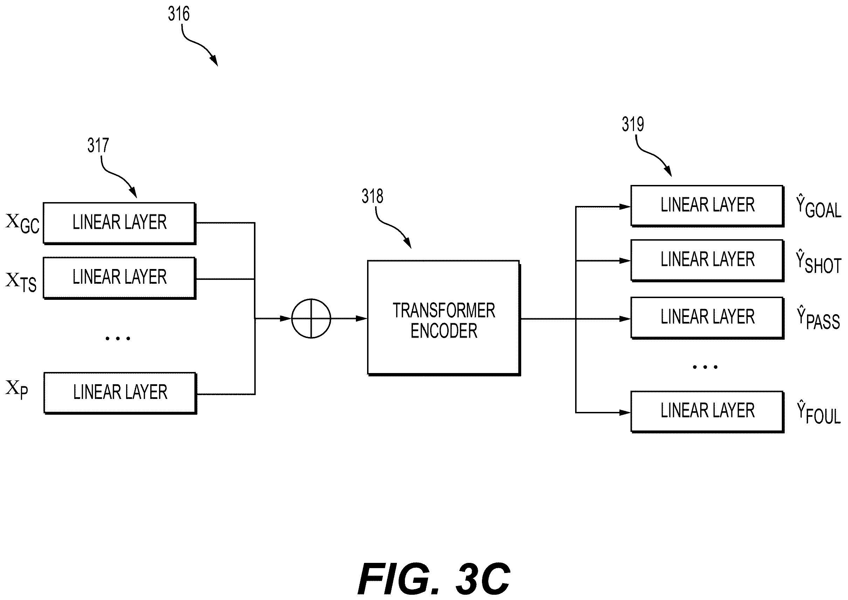

Fig. 3C is an exemplary model 316 of the linear embedding layers 317, transformer encoder layers 318, and fully connected layers 319 of the transformer-based neural network 302 of FIG. 3A, according to example embodiments. The embedding layers 317 may map the component tensors of the input into tensors with a common feature dimension. The transformer encoder layers 318 may perform attention along the temporal and agent dimensions. The fully connected layers 319 may map the output embeddings from the last transformer layer into tensors with the requested feature dimension of each target metric.

Examining the embedding layer 317, the embedding layer 317 may contain a linear block for each input tensor, and each block may map the input tensor to a tensor with a common feature dimension D. For example, for the player input tensor, the linear block may be represented by the function:

$$f_{player} : R^{T^{(i)} x P^{(i)} x D_{player}} \rightarrow R^{T^{(i)} x P^{(i)} x D}$$

The output of the linear layer may be a tuple of tensors, each with a common feature dimension, and they can be concatenated along the temporal and agent dimensions to form a single tensor:

$$E_0^{(i)} = \begin{bmatrix} f_{game-context}(X_{game-context}^{(i)}) & f_{game-state}(X_{game-state}^{(i)}) \\ f_{team-strength}(X_{team-strength}^{(i)}) & f_{team}(X_{team}^{(i)}) \\ f_{player-strength}(X_{player-strength}^{(i)}) & f_{player}(X_{player}^{(i)}) \end{bmatrix}$$

$$\in R^{(T^{(i)}+1) x (P^{(i)}+2+1) x D}$$

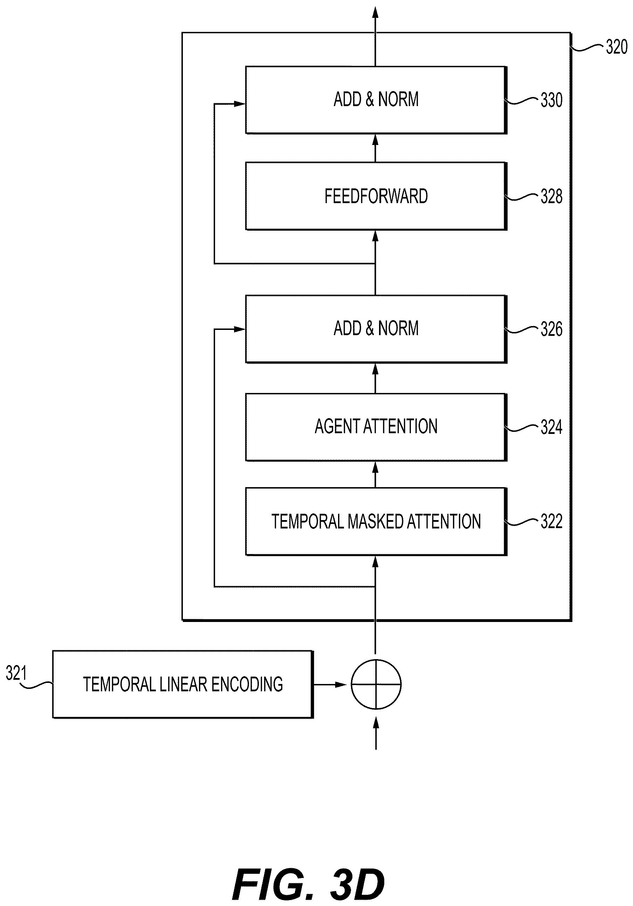

Next, the tensor $E_0^{(i)}$ may be passed to the transformer encoder layers 318 (e.g., a series of L axial transformer encoder layers, e.g., the temporal linear embeddings 321). The axial encoder layers accept a tensor with a dimensionality of 3 and first apply attention along the temporal dimension, then along the agent dimension. During training phases, an autoregressive attention mask (i.e., a 1-offset upper-triangular mask) is applied so that the time-step elements in the layer can only attend to previous time steps. This may be followed by the standard feed-forward, layer-norm and skip connections as depicted in FIG. 3D.

FIG. 3D includes an exemplary model 320 of the axial attention layer of the transformer-based neural network 302 of FIG. 3A, according to example embodiments. The model 320 may be located within the transformer encoder layers 318 of FIG. 3C.

The temporal attention step 322 may allow the agent j in time-step I to attend to previous times-steps [1..i-1]. The agent attention step 324 may allow agent j in time-step i to attend to all other agents the current time-step, (e.g., to the other player, the teams, and the game state). Next, at the add and norm step 326, the model may apply a layer normalization to the summation of the sub-layer input and output to update and stabilize the model. Next, a step of feedforward processing 328 and a further add-norm step 330 may be applied.

The attention mechanism that is implemented by the transformer encoder layers 318 may have a graphical interpretation on a dense graph where each element is a node, and the attention mask is the inverse of the adjacency matrix defining the edges between the nodes (the absence of an attention mask thus implies a fully-connected graph). In the case of the axial attention used here, with the attention mask on the temporal (row) dimension, the nodes in the graph can be arranged in a grid, and each node may be connected to all nodes in the same column, and to all previous nodes in the same row. Attention, in this case, may be message-passing where each node can accept messages describing the state of the nodes in its neighborhood, and then update its own state based on these messages. This attention scheme may mean that when making a prediction for a particular player, the model may consider (i.e. attend to): the nodes containing the previous states of the player along the time-series; and the state nodes of the other players, team and the current game state in the current time-step. It may not be necessary for the nodes to be homogeneous-beyond having the same feature dimension-and thus a node that represents a player can accept messages from a node that represents at team, or from the player's strength node. The model may therefore learn the interactions between agents, and ensure consistent predictions for each agent along the time-series.

As the transformer encoder layers 318 includes two or more layers, the state of any node can indirectly attend to the input state of all other nodes, with the exception of nodes in subsequent time-steps. This may obviate the need to duplicate any information in the input, and thus supports the efficient input representation of the tensors described within FIG. 3B.

The output of a transformer encoder layers 318 $\ell$ is a tensor of the same shape as the input, and so the layer is a function represented as:

$$g \colon R^{(T^{(i)}+1)x(P^{(i)}+2+1)xD} \; \rightarrow \; R^{(T^{(i)}+1)x(P^{(i)}+2+1)xD}$$

The output embedding of the previous layer may be utilized as input to the current layer, $E_\ell^{(i)} = g\left(E_{\ell-1}^{(i)}\right)$.

Each vector of the final output later at $E_L^{(i)}[i, j, :]$ may be the embedding of agent j at time-step i that has been updated by the attention layers to contain information from all input features up to and including the current time step. This embedding may then be utilized to directly make predictions for the required targets.

The final layers of the transformer-based neural network 302 may be the fully connected layers 319. These layers may map the output embedding of the final transformer layer of the transformer encoder layers 318 to the feature dimension of each target metric. The predictions may be required only for players at each in-game event, the slice of the output embedding $Z^{(i)} = E_L^{(i)}[1; 4; :]$ may be used to input the linear layers. For example, if the target is the final goal count for a player, and the model utilized a Poisson distribution, it may be necessary to estimate a single parameter $\lambda$ for each player at each time step. The liner layer may be the function:

$$h_a \colon R^{T^{(i)}xP^{(i)}xD} \; \rightarrow \; R^{T^{(i)}xP^{(i)}}$$

Different distribution assumptions may be made and the only difference in the model may be the output parameter dimensions of the corresponding linear layer. The transformer-based neural network 302 described herein may utilize assumptions including: Bernouilli, Poisson, Log Gaussian, and "model-free" discrete distribution.

The training of the transformer-based neural network 302 is further described herein. A corresponding loss function for the distribution assumption of each output target may be chosen. For example, the loss function may be the Poisson negative log-likelihood for a Poisson distribution, binary cross entropy for a Bernouilli distribution, etc. The losses may be computed during training according to the ground truth value for each target in the training set, and the loss values may be summed, and the model weights may be updated from the total loss using an optimizer. The learning rate may have been adjusted on a schedule with cosine annealing, without warm restarts.

As discussed above, the transformer-based neural network 302 may be configured to receive top-down features 306 as input. FIG. 4 depicts an exemplary top down prediction model 404. The outputs of the top down prediction model 404 may be the top-down features 306 input that the transformer-based neural network 302 may receive.

For example, prior to the occurrence of a sporting event, a predictor can use team-level features and regularize total predictions for the upcoming event. A top-down model can be implemented to incorporate a neural network to generate initial predictions based on match context information. Further, in some instances, the top-down model can retrieve and/or utilize third party (or "market") prediction information to compare with the generated predictions as described herein to enhance accuracy in generation of the predictions.

More specifically, FIG. 4 depicts a flow process 400 for an example top-down prediction model 404, according to example embodiments. As shown in FIG. 4, the top-down prediction model 404 can obtain match context information 402. The match context information 402 can be derived from a source of pre-game information 408. The pre-game information 408 can include historical information relating to each team identified as being part of an upcoming match, such as historical team passing feature data 410, historic team home/away passing features 412, and historic team conceded passing features 414. The pre-game information 408 data can be obtained from one or more data sources, and this data can be combined to create a set of match context information 416. Match context information 416 may refer to compiled pre-game information 408 that may be configured to be received by a neural network. The match context may for example be input as a single vector. It will be understood that the match context 402 features provided herein are examples only, and that one or more other match context 404 features may be used based on game type, input data, pre-game information 408, etc.

The combined match context information 416 can be provided to a neural network model 404. The neural network model 404 may for example utilize machine learning techniques such as such as linear regression, logistic regression, random forest, gradient boosted machine (GBM), deep learning, and/or a deep neural network. The neural network model 404 can process the feature vectors included in the match context information 416 for each team to derive one or more specified predictions 406 for each team. For example, the output can include predictions 406 that include a number of passes for a first team at the game end 420 and passes for a second team at the game end 422. These predictions 406 may be organized as features and fed into the transformer-based neural network 302 of FIG. 3A as top-down features 306.

Further, the top-down prediction models can be extended to in-play predictions. For example, the prediction models (e.g., model 404) as described herein can update predictions during the occurrence of the match to account for context information occurring during the match.

FIG. 5 is a flow process 500 for an example top-down prediction model 504 during an exemplary sporting match, according to example embodiments. As shown in FIG. 5, the match context information 502 can include both pre-game information 508 and in-game information 510. Pre-game information 508 can include historical information, such as historical passes per second for each team and a pass proportion for each team, for example. In game information 510 can include an in-game team passes per second, a goal difference, and a red card difference, for example. The pre-game information 508 and the in-game information 510 can be combined to create the match context information 502. The top-down prediction model 504 can obtain the match context and generate predictions 506 for the remainder of the game. For example, the predictions 506 can include remaining game passes per second or a team pass proportion (e.g., what portion of the total passes in the game are predicted to be performed by a team).

The predictions 506 can be combined with current game statistics to generate outputs 507 for the remainder of the match. An output 507 can include game based predictions such as game remaining passes (e.g., remaining game passes per second and per seconds remaining). The prediction 506 can also include team based predictions such as team 1 remaining passes (remaining game passes per second, seconds remaining, and per the team 1 pass proportion). The output 507 can also include, for example, team 2 remaining passes 418 (remaining game passes per second, seconds remaining, and 1- team 1 pass proportion). The outputs 507 can be dynamically updated as the match progresses, and the top-down prediction model 504 can obtain new information, such as a number of seconds remaining in the match and current statistics for the match, for example. Accordingly, predictions 506 may be point-in-time predictions which may be updated throughout the duration of a given match. Predictions 506 may be based, at least in part, based on a time based input (e.g., time elapsed, time remaining, team time of possession, etc.).

In some instances, the in-game predictions can be performed by updating the pre-game predictions using a decay function. The pre-game predictions can be generated, and then to get live in-game predictions, the minute in the game can be taken as part of a decay function. For example, an in-game prediction = Pre-game prediction * (90 - 60)/90 + Actual event count at minute 60. As another example, an in-game prediction = (100 passes) * (90 - 60)/90 + (50 passes thus far) = 85.5 passes

In some instances, an exception to this can be made when a player is sent off with a red card or subbed from the match. In these cases, the 'prediction' can become the actual amount up until that moment. For example, for an in-game team predictions, in-game the models can predict the final pass count of each team.

As an illustrative example, the system as described herein can dynamically update a prediction (e.g., a total number of passes in a game) as the game progresses. FIG. 6 is an example graphical representation 600 of a predicted number of passes and an actual number of passes during a sporting event. The graphical representation 600 illustrates a number of passes (y-axis 602) as a function of time (minutes played along the x-axis 604). First, a number of major events for each team can be tracked. For example, major events can include a goal as depicted by the circles or a red card depicted by the squares tracked with a corresponding time in which each major event occurs. Each major event can modify the prediction, such as a red card reducing a predicted number of passes (e.g., as shown in 606).

The graphical representation 600 can also include a current actual total number of passes 610 as the game progresses and a final actual total number of passes 608. As the match progresses, the models as described herein can update, causing the predicted number of passes to come closer to the actual current number of passes and the final total number of passes as time expires in the match.

## Cloud Computing Pipeline

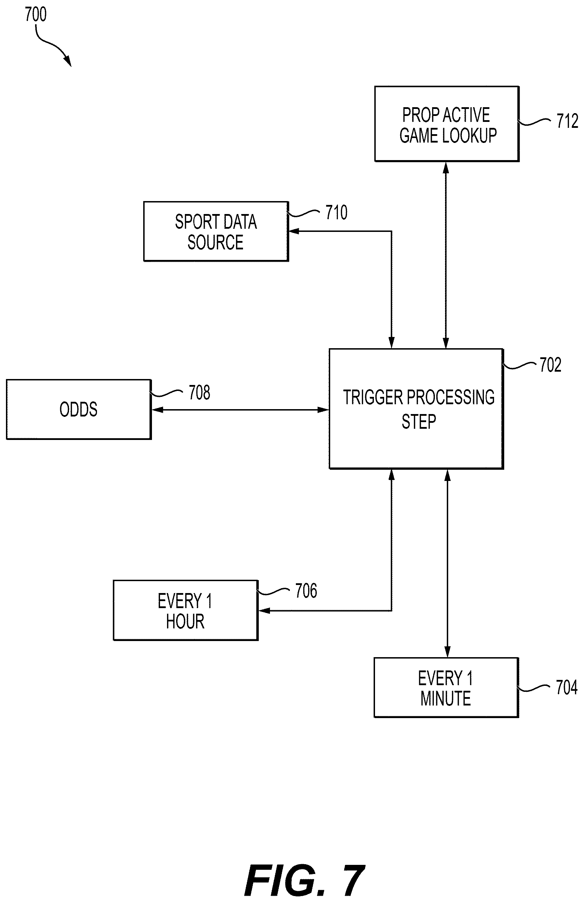

A cloud computing pipeline can generate pre-game and/or in-game predictions using a processing pipeline. The processing pipeline can comprise a series of processing steps, otherwise described as "Lambdas." Such a processing step or Lambda may refer to a programming language feature that enables the creation of functions. For instance, the processing pipeline can include six processing steps, with a goal of the pipeline to respond to specific events, trigger the models, generate the predictions, and send the predictions to the defined client. The exemplary processing steps depicted in FIG. 7-11 may for example be utilized to initiate and/or implement the transformer-based neural network of FIG. 3A-3D.

A first processing step can include a trigger processing step, which can trigger the pipeline. For example, the trigger processing step can include checking, upon a given or dynamic duration of time (e.g., each hour or each minute), whether any sporting events are scheduled to start in a specified time window (e.g., 11-12 hours before the start of the match) or that are live.

When a relevant atomic action related to a game (e.g., a goal, a foul, the announcement of a lineup, etc.) is detected, such as when a game is upcoming, when a game live, when a line up for a game is provided, or when odds change for the game, the trigger processing step can trigger the models to generate predictions for the event.

FIG. 7 is an example flow process 700 for a trigger processing step 702. As shown in FIG. 7, a trigger processing step 702 can periodically check sources (e.g., a data platform (gold standard data platform GSDP) Redshift machine learning platform) at a first elapsed time (e.g., every hour 706) and a database (e.g., DynamoDB) at a second elapsed time (e.g., every minute 704). The trigger processing step 702 can obtain data from various sources (e.g., odds data source 708, a data source 710, prop active game lookup 712) to determine whether a new event is triggered.

A feature creator processing step can be triggered by the trigger processing step and can initiate creation of features (or update created features) for an event. For example, if a game is an in upcoming window or a new lineup is provided, the feature creator processing step can query data from the data platform to create features and save the features in a database.

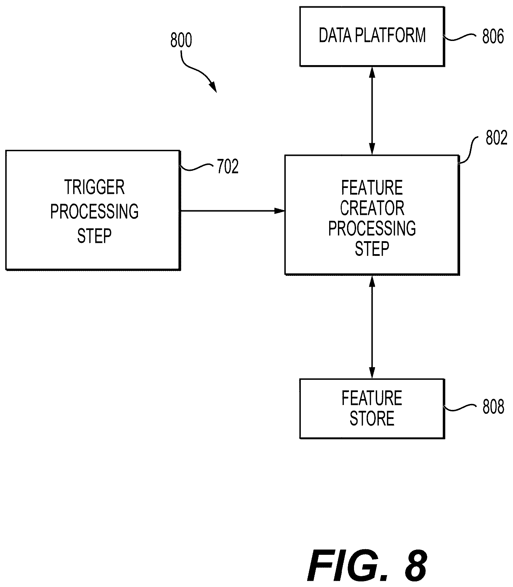

FIG. 8 is an example flow process 800 for a feature creation processing step 802. As shown in FIG. 8, the feature creator processing step 802 can be triggered by the trigger processing step 702 and can generate features for the game as described herein. The system can obtain historical data for each player and team to generate the features for the match. The feature creator processing step 802 can query data from the data platform (e.g., GSDP Redshift 806) and save the features in a database (e.g., feature store 808). These features may then be automatically transferred to and send to the transformer-based neural network 302 of Fig. 3A.

A prop predictor processing step can be triggered by both the trigger processing step and the feature creator processing step, responsive to the features being created (or updated). The prop predictor can obtain features from a feature store, send the features to a third-party API, receives predictions from the API, and send the predictions to the data platform, which can then be forwarded to another platform.

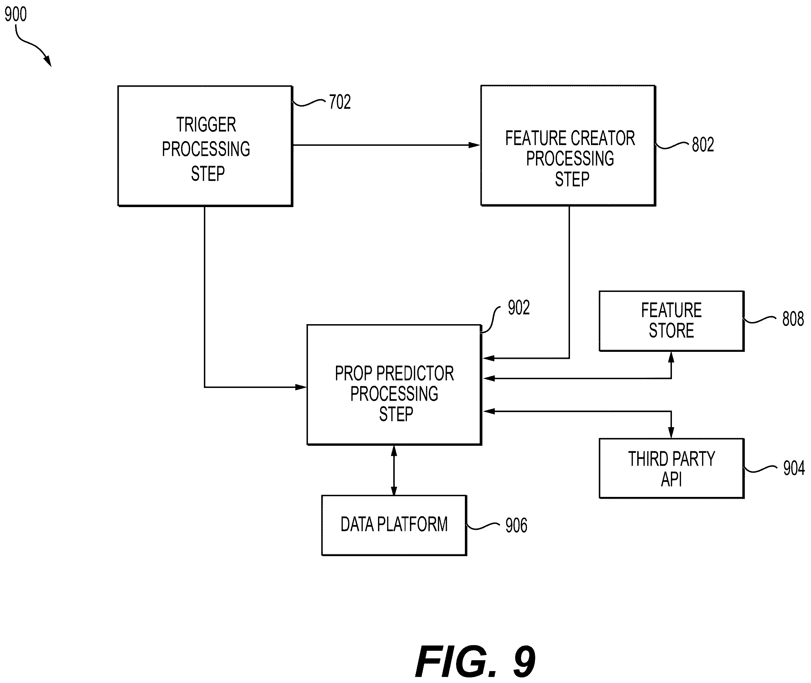

FIG. 9 is an example flow process 900 of a prop predictor processing step 902. As shown in FIG. 9, a trigger processing step 702 and a feature creator processing step 802 can trigger the prop predictor processing step 902. The prop predictor processing step 902 can obtain features from a feature store 808 and provide the features to the API 904. Predictions from one or more third-party sources can be obtained via the API 904, and the predictions can be fed into the data platform 906.

A team prop predictor processing step can be triggered by both the trigger processing step and the feature creator processing step, responsive to the features being created (or updated). The team prop predictor processing step can obtain the features from the feature store (and, in some cases, the third-party predictions), derive team predictions, and store the predictions in a prediction store. The team predictions can be made by a top-down model as described herein (e.g., as depicted in FIG. 4 and FIG. 5).

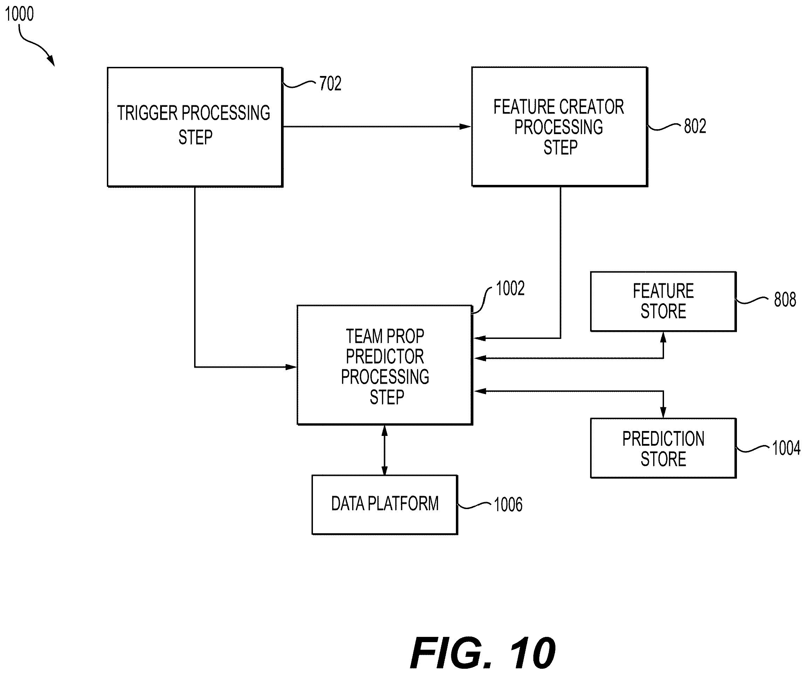

FIG. 10 is an example flow process 1000 for a team prop predictor processing step 1002. The team prop predictor processing step 1002 can be triggered by any of the trigger processing step 702 and the feature creator processing step 802. Further, the team prop predictor processing step 1002 can obtain features from feature store 808, derive team predictions, and provide the predictions to a prediction store 1004 and a data platform 1006.

A player prop predictor processing step can be triggered by the generation of the team predictions by the team prop predictor processing step (e.g., 1002). The player prop predictor can obtain the features and the team predictions and can generate player predictions using a bottom-up model as described herein.

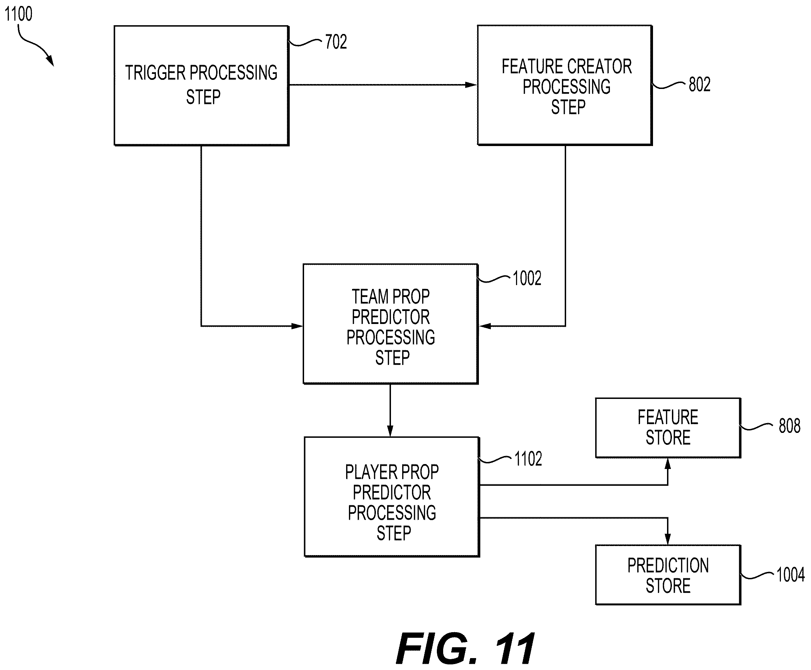

FIG. 11 is an example flow process 1100 for a player prop predictor processing step 1102. As shown in FIG. 11, the trigger processing step 702 and the feature creator processing step 802 can trigger the team prop predictor processing step 1002. The team prop predictor processing step 1002 can trigger the player prop predictor processing step 1102. The player prop predictor processing step 1102 can obtain team predictions (e.g., from prediction store) generated by the team prop predictor processing step 1002 and features (e.g., from 808) previously generated for the sporting event. The player prop predictor processing step 1102 can further generate player predictions using a bottom-up model as described herein (e.g., utilizing the transformer-based neural network 302 of FIG. 3A). The player predictions can be stored in the prediction store 1004.

A combine prop predictor processing step can be triggered to generation of the player predictions by the player prop predictor processing step (e.g., 1102). The combine prop predictor can obtain the team predictions and the player predictions and can combine the predictions for the sporting event. The combine prop predictor processing step can normalize the player predictions based on corresponding team predictions.

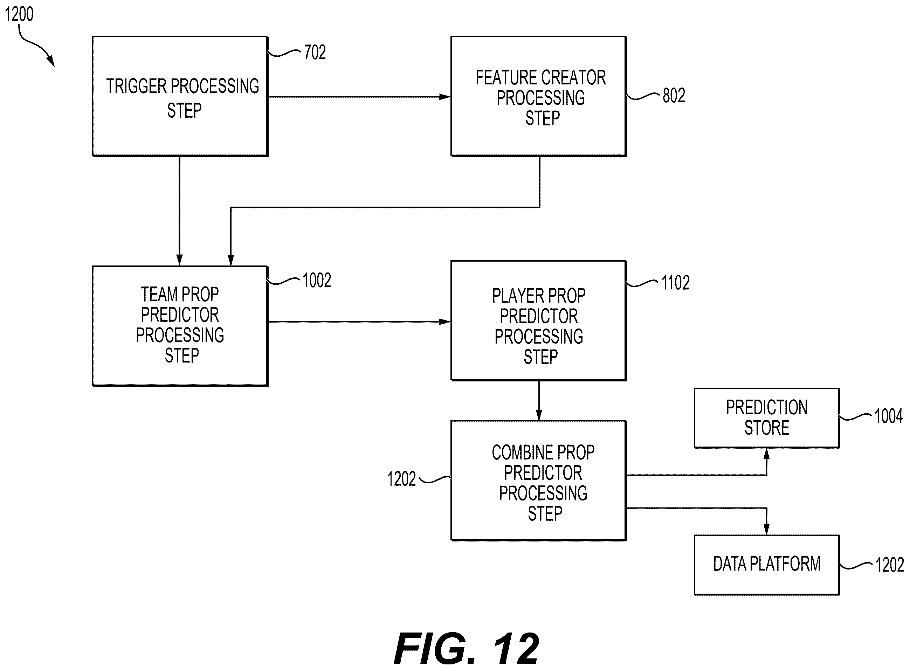

FIG. 12 is an example flow process 1200 for a combine prop predictor processing step 1202. As shown in FIG. 12, the trigger processing step 702 and the feature creator processing step 802 can trigger the team prop predictor processing step 1002. The team prop predictor processing step 1002 can trigger the player prop predictor processing step 1102. The player prop predictor processing step 1102 can trigger the combine prop predictor processing step 1202. The combine prop predictor processing step 1202 can obtain the team predictions and the player predictions form the prediction store 1004 and can normalize the player predictions based on the team predictions as described herein. The combine prop predictor processing step 1202 can interact with the data platform 1206 to generate combined predictions, and the combined predictions can be stored in the prediction store.

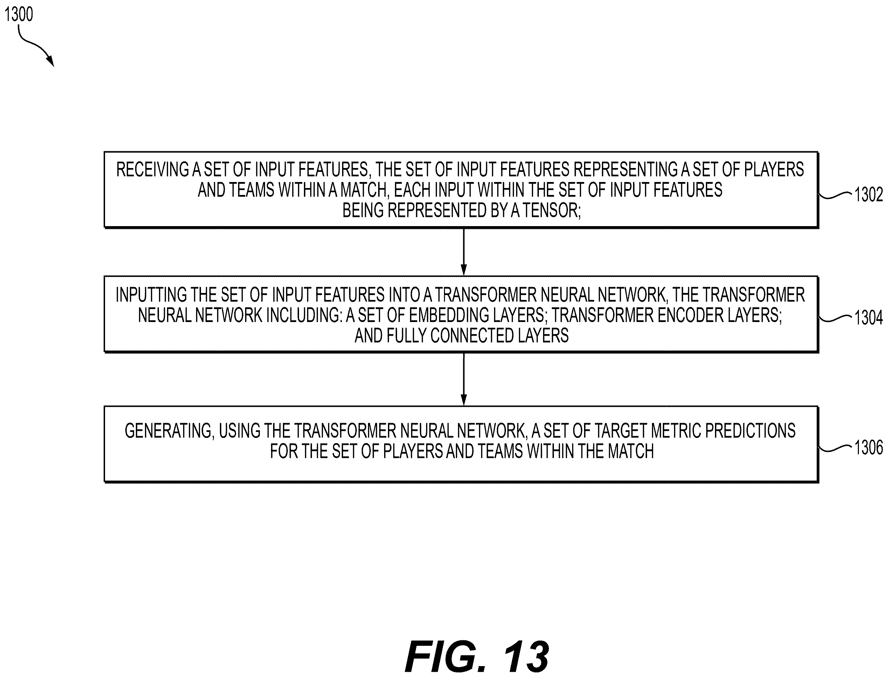

FIG. 13 is an example flow process 1300 for generating predictions for teams and players associated with a sporting event, according to an example embodiment. The flow process 700 may for example be performed by the transformer-based neural network 302 of FIG. 3A-3D and top-down prediction model 404 of FIG. 4 or the top-down prediction model 504 of FIG. 5.

At step 1302, one or more top-down predictions for the sporting event may be generated by a first neural network, the top-down predictions being team-level predictions. The one or more top-down predictions may be generated by incorporating at least one historical team information or market information as inputs to the first neural network. The team-level prediction may be a prediction for one or more of a number of goals, shots, shots-on-target, assists, passes, fouls, yellow-cards, or red-cards for a match, by a team

At step 1304, the top-down predictions may be provided as one or more top-down feature vectors to a computing system.

At step 1306, the computing system may receive a second set of feature vectors comprising data for one or more players associated with one or more respective teams and data for one or more teams associated with a sporting event. The data for the one or more players may include actions of one or more agents on a playing surface received from a tracking device.

At step 1308, the one or more top-down feature vectors and second set of feature vectors may be input into a transformer-based neural network. The transformer-based neural network may include a set of embedding layers, transformer encoder layers; and fully connected layers.

At step 1310, one or more predictions for the sporting event may be generated based on the one or more top-down feature vectors and the second set of feature vectors. The once or more predictions for the sporting event may be caused to be displayed on a display device.

Further, updated data for the one or more players or teams may be received from a tracking device. The updated data may be provided to one or more of the first neural network or the transformer-based neural network. An updated one or more predictions may be generated for the sporting event based on the updated data.

A data platform may be accessed using a trigger processing step at a set interval to determine when the sporting event occurs. The second set of features vectors may be created using a feature creator processing step by querying data from the data platform.

**Neural Network Training and Computing System Overview**

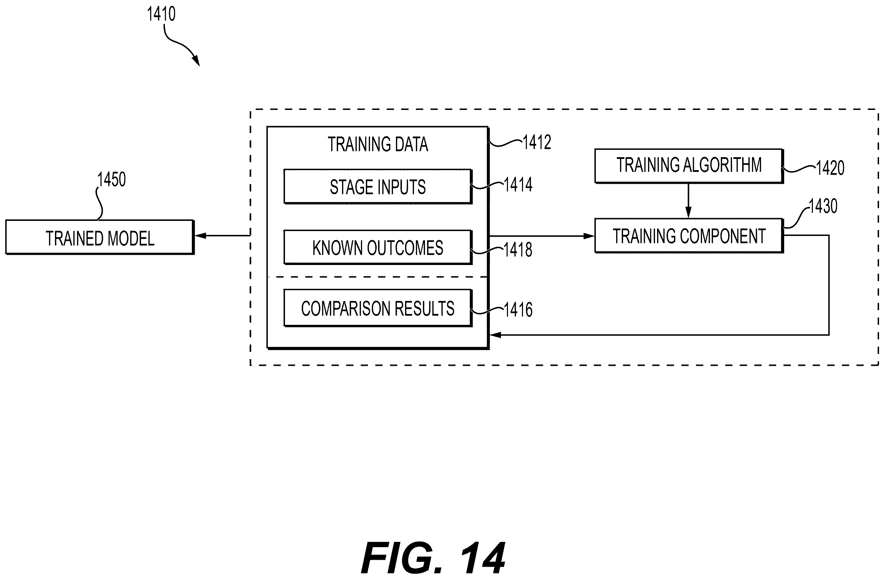

FIG. 14 depicts a flow diagram for training a machine learning model, in accordance with an aspect. As shown in flow diagram 1410 of FIG. 14, training data 1412 may include one or more of stage inputs 1414 and known outcomes 1418 related to a machine learning model to be trained. The stage inputs 1414 may be from any applicable source including a component or set shown in the figures provided herein. The known outcomes 1418 may be included for machine learning models generated based on supervised or semi-supervised training. An unsupervised machine learning model might not be trained using known outcomes 1418. Known outcomes 1418 may include known or desired outputs for future inputs similar to or in the same category as stage inputs 1414 that do not have corresponding known outputs.

The training data 1412 and a training algorithm 1420 may be provided to a training component 1430 that may apply the training data 1412 to the training algorithm 1420 to generate a trained machine learning model 1450. According to an implementation, the training component 1430 may be provided comparison results 1416 that compare a previous output of the corresponding machine learning model to apply the previous result to re-train the machine learning model. The comparison results 1416 may be used by the training component 1430 to update the corresponding machine learning model. The training algorithm 1420 may utilize machine learning networks and/or models including, but not limited to a deep learning network such as Deep Neural Networks (DNN), Convolutional Neural Networks (CNN), Fully Convolutional Networks (FCN) and Recurrent Neural Networks (RCN), probabilistic models such as Bayesian Networks and Graphical Models, and/or discriminative models such as Decision Forests and maximum margin methods, or the like. The output of the flowchart 1400 may be a trained machine learning model 1450.

A machine learning model disclosed herein may be trained by adjusting one or more weights, layers, and/or biases during a training phase. During the training phase, historical or simulated data may be provided as inputs to the model. The model may adjust one or more of its weights, layers, and/or biases based on such historical or simulated information. The adjusted weights, layers, and/or biases may be configured in a production version of the machine learning model (e.g., a trained model) based on the training. Once trained, the machine learning model may output machine learning model outputs in accordance with the subject matter disclosed herein. According to an implementation, one or more machine learning models disclosed herein may continuously update based on feedback associated with use or implementation of the machine learning model outputs.

It should be understood that aspects in this disclosure are exemplary only, and that other aspects may include various combinations of features from other aspects, as well as additional or fewer features.

In general, any process or operation discussed in this disclosure that is understood to be computer-implementable, such as the processes illustrated in the flowcharts disclosed herein, may be performed by one or more processors of a computer system, such as any of the systems or devices in the exemplary environments disclosed herein, as described above. A process or process step performed by one or more processors may also be referred to as an operation. The one or more processors may be configured to perform such processes by having access to instructions (e.g., software or computer-readable code) that, when executed by the one or more processors, cause the one or more processors to perform the processes. The instructions may be stored in a memory of the computer system. A processor may be a central processing unit (CPU), a graphics processing unit (GPU), or any suitable types of processing unit.

A computer system, such as a system or device implementing a process or operation in the examples above, may include one or more computing devices, such as one or more of the systems or devices disclosed herein. One or more processors of a computer system may be included in a single computing device or distributed among a plurality of computing devices. A memory of the computer system may include the respective memory of each computing device of the plurality of computing devices.

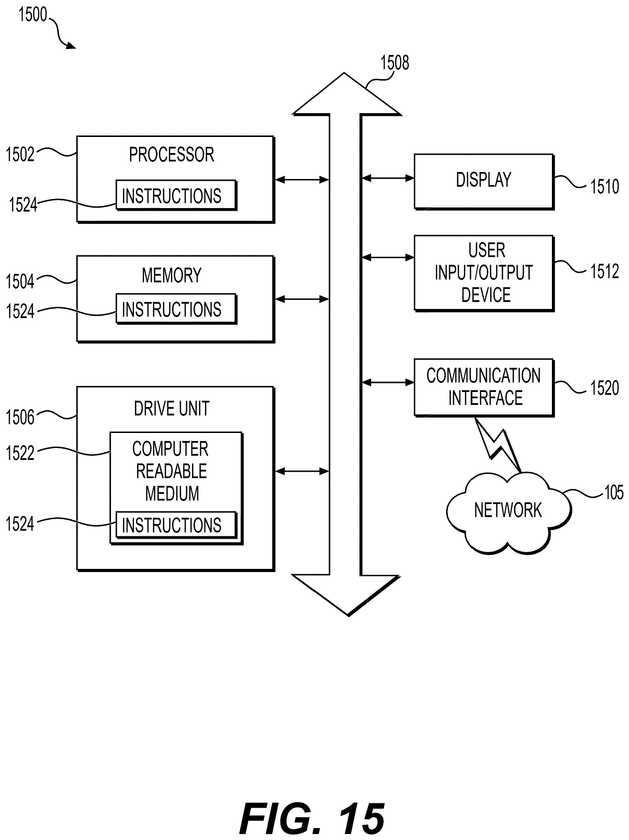

FIG. 15 is a simplified functional block diagram of a computer 1500 that may be configured as a device for executing the methods disclosed here, according to exemplary aspects of the present disclosure. For example, the computer 1500 may be configured as a system according to exemplary aspects of this disclosure. In various aspects, any of the systems herein may be a computer 1500 including, for example, a data communication interface 1520 for packet data communication. The computer 1500 also may include a central processing unit ("CPU") 1502, in the form of one or more processors, for executing program instructions. The computer 1500 may include an internal communication bus 1508, and a storage unit 1506 (such as ROM, HDD, SDD, etc.) that may store data on a computer readable medium 1522, although the computer 1500 may receive programming and data via network communications.

The computer 1500 may also have a memory 1504 (such as RAM) storing instructions 1524 for executing techniques presented herein, for example the methods described with respect to Fig. 13, although the instructions 1524 may be stored temporarily or permanently within other modules of computer 1500 (e.g., processor 1502 and/or computer readable medium 1522). The computer 1500 also may include input and output ports 1512 and/or a display 1510 to connect with input and output devices such as keyboards, mice, touchscreens, monitors, displays, etc. The various system functions may be implemented in a distributed fashion on a number of similar platforms, to distribute the processing load. Alternatively, the systems may be implemented by appropriate programming of one computer hardware platform.

Program aspects of the technology may be thought of as "products" or "articles of manufacture" typically in the form of executable code and/or associated data that is carried on or embodied in a type of machine-readable medium. "Storage" type media include any or all of the tangible memory of the computers, processors or the like, or associated modules thereof, such as various semiconductor memories, tape drives, disk drives and the like, which may provide non-transitory storage at any time for the software programming. All or portions of the software may at times be communicated through the Internet or various other telecommunication networks. Such communications, for example, may enable loading of the software from one computer or processor into another, for example, from a management server or host computer of the mobile communication network into the computer platform of a server and/or from a server to the mobile device. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links, or the like, also may be considered as media bearing the software. As used herein, unless restricted to non-transitory, tangible "storage" media, terms such as computer or machine "readable medium" refer to any medium that participates in providing instructions to a processor for execution.

While the disclosed methods, devices, and systems are described with exemplary reference to transmitting data, it should be appreciated that the disclosed aspects may be applicable to any environment, such as a desktop or laptop computer, an automobile entertainment system, a home entertainment system, etc. Also, the disclosed aspects may be applicable to any type of Internet protocol.

It should be appreciated that in the above description of exemplary aspects of the invention, various features of the invention are sometimes grouped together in a single aspect, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed aspect. Thus, the claims following the Detailed Description are hereby expressly incorporated into this Detailed Description, with each claim standing on its own as a separate aspect of this invention.

Furthermore, while some aspects described herein include some but not other features included in other aspects, combinations of features of different aspects are meant to be within the scope of the invention, and form different aspects, as would be understood by those skilled in the art. For example, in the following claims, any of the claimed aspects can be used in any combination.

Thus, while certain aspects have been described, those skilled in the art will recognize that other and further modifications may be made thereto without departing from the spirit of the invention, and it is intended to claim all such changes and modifications as falling within the scope of the invention. For example, functionality may be added or deleted from the block diagrams and operations may be interchanged among functional blocks. Operations may be added or deleted to methods described within the scope of the present invention.

The above disclosed subject matter is to be considered illustrative, and not restrictive, and the appended claims are intended to cover all such modifications, enhancements, and other implementations, which fall within the true spirit and scope of the present disclosure. Thus, to the maximum extent allowed by law, the scope of the present disclosure is to be determined by the broadest permissible interpretation of the following claims and their equivalents, and shall not be restricted or limited by the foregoing detailed description. While various implementations of the disclosure have been described, it will be apparent to those of ordinary skill in the art that many more implementations are possible within the scope of the disclosure. Accordingly, the disclosure is not to be restricted except in light of the attached claims and their equivalents.

The following paragraphs provide a list of additional embodiments which may serve as basis for claims in this application or in any subsequently filed divisional application(s).

Embodiment 1: A method of generating predictions for teams and players associated with a sporting event using a transformer neural network, the method comprising: receiving a set of input features, the set of input features representing a set of players and teams within a match, each input within the set of input features being represented by a tensor; inputting the set of input features into a transformer neural network, the transformer neural network including: a set of embedding layers; transformer encoder layers; and fully connected layers; and generating, using the transformer neural network, a set of target metric predictions for the set of players and teams within the match.

Embodiment 2: The method of embodiment 1, wherein each tensor within the set of input features corresponds to a grain level of a plurality of a grain levels, the grain level indicating that the tensor belongs to either a player-level, a team-frame-level, or a game-level category.

Embodiment 3: The method of embodiment 1, wherein the set of input features includes: a first tensor of live player features indicating a player's position and team, and a running total of actions performed by a player in the set of players; a second tensor of player strength features indicating a player's aggregate statistics of the player's actions over a set of previous games; a third tensor of live team features indicating running totals of actions performed by a team of the set of teams within the match; a fourth tensor of team strength features indicating aggregated statistics of a team's aggregate statistics over the set of previous games; a fifth tensor of live game state features indicating attributes of the match including at least one of an event-type, a game-clock time, or event location; and a sixth tensor of game context features indicating a league in which the match is taking place and a time associated with the match.

Embodiment 4: The method of embodiment 1, wherein inputting the set of input features into the transformer neural network further includes: mapping, using the set of embedding layers, the set of input features into a set of tensors with a common feature dimension, wherein the set of embedding layers includes a linear layer for each input of the set of input features.

Embodiment 5: The method of embodiment 4, wherein inputting the set of input features into the transformer neural network further includes: the transformer encoder layers receiving the mapped set of tensors with common feature dimension from the set of embedding layers; and computing, using the transformer encoder layers, self-attention along temporal and agent dimensions to the mapped set of tensors with common feature dimensions to generate transformer encoder layer embeddings.

Embodiment 6: The method of embodiment 5, wherein inputting the set of input features into the transformer neural network further includes: mapping, using the fully connected layers, the transformer encoder layer embeddings into tensors corresponding to target metrics.

Embodiment 7: The method of embodiment 1, wherein creating a set of inputs features occurs automatically upon detection of the sporting event being scheduled.

Embodiment 8: The method of embodiment 7, wherein a feature creator processing step initiates creation of the set of input features for the sporting event, upon querying data from a data platform.

Embodiment 9: The method of embodiment 1, wherein the target metric predictions include: goals, assists, shots, shots on target, passes, fouls, yellow cards, red cards and/or minutes for one or more of the players.

Embodiment 10: The method of embodiment 1, wherein the set of generated predictions for at least one action specific for each player or team associated with the sporting event is updated temporally during a match.

Embodiment 11: A system for generating predictions for teams and players associated with a sporting event using a transformer neural network, the system comprising: a non-transitory computer readable medium configured to store processor-readable instructions; and a processor operatively connected to the non-transitory computer readable medium, and configured to execute the instructions to perform operations comprising: receiving a set of input features, the set of input features representing a set of players and teams within a match, each input within the set of input features being represented by a tensor; inputting the set of input features into a transformer neural network, the transformer neural network including: a set of embedding layers; transformer encoder layers; and fully connected layers; and generating, using the transformer neural network, a set of target metric predictions for the set of players and teams within the match.

Embodiment 12: The system of embodiment 11, wherein each tensor within the set of input features corresponds to a grain level of a plurality of a grain levels, the grain level indicating that the tensor belongs to either a player-level, a team-frame-level, or a game-level category.

Embodiment 13: The system of embodiment 11, wherein the set of input features includes: a first tensor of live player features indicating a player's position and team, and a running total of actions performed by a player in the set of players; a second tensor of player strength features indicating a player's aggregate statistics of the player's actions over a set of previous games; a third tensor of live team features indicating running totals of actions performed by a team of the set of teams within the match; a fourth tensor of team strength features indicating aggregated statistics of a team's aggregate statistics over the set of previous games; a fifth tensor of live game state features indicating attributes of the match including at least one of an event-type, a game-clock time, or event location; and a sixth tensor of game context features indicating a league in which the match is taking place and a time associated with the match.

Embodiment 14: The system of embodiment 11, wherein inputting the set of input features into the transformer neural network further includes: mapping, using the set of embedding layers, the set of input features into a set of tensors with a common feature dimension, wherein the set of embedding layers includes a linear layer for each input of the set of input features.

Embodiment 15: The system of embodiment 14, wherein inputting the set of input features into the transformer neural network further includes: the transformer encoder layers receiving the mapped set of tensors with common feature dimension from the set of embedding layers; and computing, using the transformer encoder layers, self-attention along temporal and agent dimensions to the mapped set of tensors with common feature dimensions to generate transformer encoder layer embeddings.

Embodiment 16: The system of embodiment 15, wherein inputting the set of input features into the transformer neural network further includes: mapping, using the fully connected layers, the transformer encoder layer embeddings into tensors corresponding to target metrics.

Embodiment 17: The system of embodiment 15, wherein creating a set of inputs features occurs automatically upon detection of the sporting event being scheduled.

Embodiment 18: The system of embodiment 15, wherein the target metric predictions include: goals, assists, shots, shots on target, passes, fouls, yellow cards, red cards and/or minutes for one or more of the players.

Embodiment 19: A non-transitory computer readable medium configured to store processor-readable instructions, wherein when executed by a processor, the instructions perform operations comprising: receiving a set of input features, the set of input features representing a set of players and teams within a match, each input within the set of input features being represented by a tensor; inputting the set of input features into a transformer neural network, the transformer neural network including: a set of embedding layers; transformer encoder layers; and fully connected layers; and generating, using the transformer neural network, a set of target metric predictions for the set of players and teams within the match.

Embodiment 20: The non-transitory computer readable medium of embodiment 19, wherein the target metric predictions include: goals, assists, shots, shots on target, passes, fouls, yellow cards, red cards and/or minutes for one or more of the players.

**Claims**

1. A computer-implemented method of generating predictions for teams and players associated with a physical sporting event using a transformer neural network, the method comprising:

   recording, using a tracking system, motions and actions of agents on a playing surface, wherein the agents comprise players on the playing surface, and the tracking system comprises an optically-based system using a camera;
   transmitting measurements from the tracking system across a network to a computing system, wherein the measurements correspond to the motions and actions of the agents;
   receiving, using the computing system, a set of input features, the set of input features representing a set of players and teams within a match, each input within the set of input features being represented by a tensor, wherein the set of input features comprise the actions of one or more agents on the playing surface received from the tracking system and wherein the set of input features includes:

   a first tensor of live player features indicating a player's position and team, and a running total of actions performed by a player in the set of players;
   a second tensor of player strength features indicating a player's aggregate statistics of the player's actions over a set of previous games;
   a third tensor of live team features indicating running totals of actions performed by a team of the set of teams within the match;
   a fourth tensor of team strength features indicating aggregated statistics of a team's aggregate statistics over the set of previous games;
   a fifth tensor of live game state features indicating attributes of the match including at least one of an event-type, a game-clock time, or event location; and
   a sixth tensor of game context features indicating a league in which the match is taking place and a time associated with the match;
   inputting, using the computing system, the set of input features into a transformer neural network, the transformer neural network including:

   a set of embedding layers;
   transformer encoder layers;
   fully connected layers;

   mapping, using the set of embedding layers, the set of input features into a set of tensors with a common feature dimension, wherein the set of embedding layers includes a linear layer for each input of the set of input features;
   the transformer encoder layers receiving the mapped set of tensors with common feature dimension from the set of embedding layers; and
   computing, using the transformer encoder layers, self-attention along temporal and agent dimensions to the mapped set of tensors with common feature dimensions to generate transformer encoder layer embeddings; and
   generating, using the transformer neural network, a set of predictions for the set of players and teams within the match, wherein the predictions include: a goal, an assist, a shot, a shot on target and/or a pass and wherein the set of generated predictions for at least one action specific for each player or team associated with the sporting event is updated temporally during a match.

2. The method of claim 1, wherein each tensor within the set of input features corresponds to a grain level of a plurality of a grain levels, the grain level indicating that the tensor belongs to either a player-level, a team-frame-level, or a game-level category.

3. The method of claim 1, wherein inputting the set of input features into the transformer neural network further includes:
   mapping, using the fully connected layers, the transformer encoder layer embeddings into tensors corresponding to target metrics.

4. The method of claim 1, wherein creating a set of inputs features occurs automatically upon detection of the sporting event being scheduled.

5. The method of claim 4, wherein a feature creator processing step initiates creation of the set of input features for the sporting event, upon querying data from a data platform.

6. A system for generating predictions for teams and players associated with a physical sporting event using a transformer neural network, the system comprising:

a non-transitory computer readable medium configured to store processor-readable instructions; and
a processor operatively connected to the non-transitory computer readable medium, and configured to execute the instructions to perform operations comprising:

recording, using a tracking system, motions and actions of agents on a playing surface, wherein the agents comprise players on the playing surface, and the tracking system comprises an optically-based system using a camera;
transmitting measurements from the tracking system across a network to a computing system, wherein the measurements correspond to the motions and actions of the agents;
receiving, using the computing system, a set of input features, the set of input features representing a set of players and teams within a match, each input within the set of input features being represented by a tensor, wherein the set of input features comprise actions of one or more agents on a playing surface received from a tracking system and wherein the set of input features includes:

a first tensor of live player features indicating a player's position and team, and a running total of actions performed by a player in the set of players;
a second tensor of player strength features indicating a player's aggregate statistics of the player's actions over a set of previous games;
a third tensor of live team features indicating running totals of actions performed by a team of the set of teams within the match;
a fourth tensor of team strength features indicating aggregated statistics of a team's aggregate statistics over the set of previous games;
a fifth tensor of live game state features indicating attributes of the match including at least one of an event-type, a game-clock time, or event location; and
a sixth tensor of game context features indicating a league in which the match is taking place and a time associated with the match;
inputting, using the computing system, the set of input features into a transformer neural network, the transformer neural network including:

a set of embedding layers;
transformer encoder layers;
fully connected layers;

mapping, using the set of embedding layers, the set of input features into a set of tensors with a common feature dimension, wherein the set of embedding layers includes a linear layer for each input of the set of input features;
the transformer encoder layers receiving the mapped set of tensors with common feature dimension from the set of embedding layers; and
computing, using the transformer encoder layers, self-attention along temporal and agent dimensions to the mapped set of tensors with common feature dimensions to generate transformer encoder layer embeddings; and
generating, using the transformer neural network, a set of predictions for the set of players and teams within the match, wherein the predictions include: a goal, an assist, a shot, a shot on target and/or a pass and wherein the set of generated predictions for at least one action specific for each player or team associated with the sporting event is updated temporally during a match.

7. The system of claim 6, wherein each tensor within the set of input features corresponds to a grain level of a plurality of a grain levels, the grain level indicating that the tensor belongs to either a player-level, a team-frame-level, or a game-level category.

8. The system of claim 6, wherein inputting the set of input features into the transformer neural network further includes: mapping, using the fully connected layers, the transformer encoder layer embeddings into tensors corresponding to target metrics.

9. The system of claim 6, wherein creating a set of inputs features occurs automatically upon detection of the sporting event being scheduled.

10. A non-transitory computer readable medium configured to store processor-readable instructions, wherein when executed by a processor, the instructions perform operations comprising:

recording, using a tracking system, motions and actions of agents on a playing surface, wherein the agents comprise players on the playing surface, and the tracking system comprises an optically-based system using a camera;
transmitting measurements from the tracking system across a network to a computing system, wherein the measurements correspond to the motions and actions of the agents;
receiving, using the computing system, a set of input features, the set of input features representing a set of players and teams within a match, each input within the set of input features being represented by a tensor, wherein the set of input features comprise actions of one or more agents on a playing surface received from a tracking system and wherein the set of input features includes:

a first tensor of live player features indicating a player's position and team, and a running total of actions performed by a player in the set of players;
a second tensor of player strength features indicating a player's aggregate statistics of the player's actions over a set of previous games;
a third tensor of live team features indicating running totals of actions performed by a team of the set of teams within the match;
a fourth tensor of team strength features indicating aggregated statistics of a team's aggregate statistics over the set of previous games;
a fifth tensor of live game state features indicating attributes of the match including at least one of an event-type, a game-clock time, or event location; and
a sixth tensor of game context features indicating a league in which the match is taking place and a time associated with the match;

inputting, using the computing system, the set of input features into a transformer neural network, the transformer neural network including:

a set of embedding layers;
transformer encoder layers;
fully connected layers;
mapping, using the set of embedding layers, the set of input features into a set of tensors with a common feature dimension, wherein the set of embedding layers includes a linear layer for each input of the set of input features;
the transformer encoder layers receiving the mapped set of tensors with common feature dimension from the set of embedding layers; and
computing, using the transformer encoder layers, self-attention along temporal and agent dimensions to the mapped set of tensors with common feature dimensions to generate transformer encoder layer embeddings; and

generating, using the transformer neural network, a set of predictions for the set of players and teams within the match, wherein the predictions include: a goal, an assist, a shot, a shot on target and/or a pass and wherein the set of generated predictions for at least one action specific for each player or team associated with the sporting event is updated temporally during a match.

11. The method of claim 1, the system of claim 6, or the non-transitory computer readable medium of claim 10, wherein the self-attention is configured to pass messages between pairs of connected nodes such that they update their state, and once the node states have been updated, simultaneous predictions are made for each node.

**FIG. 1**

FIG. 2A

EP 4 700 650 A2

FIG. 2B

EP 4 700 650 A2

FIG. 3A

**FIG. 3B**

**FIG. 3C**

FIG. 3D

**FIG. 4**

EP 4 700 650 A2

**FIG. 5**

FIG. 6

*FIG. 7*

FIG. 8

EP 4 700 650 A2

**FIG. 9**

**FIG. 10**

EP 4 700 650 A2

**FIG. 11**

**FIG. 12**

EP 4 700 650 A2

1300

RECEIVING A SET OF INPUT FEATURES, THE SET OF INPUT FEATURES REPRESENTING A SET OF PLAYERS AND TEAMS WITHIN A MATCH, EACH INPUT WITHIN THE SET OF INPUT FEATURES BEING REPRESENTED BY A TENSOR; — 1302

INPUTTING THE SET OF INPUT FEATURES INTO A TRANSFORMER NEURAL NETWORK, THE TRANSFORMER NEURAL NETWORK INCLUDING: A SET OF EMBEDDING LAYERS; TRANSFORMER ENCODER LAYERS; AND FULLY CONNECTED LAYERS — 1304

GENERATING, USING THE TRANSFORMER NEURAL NETWORK, A SET OF TARGET METRIC PREDICTIONS FOR THE SET OF PLAYERS AND TEAMS WITHIN THE MATCH — 1306

*FIG. 13*

*FIG. 14*

**FIG. 15**

**REFERENCES CITED IN THE DESCRIPTION**

**Patent documents cited in the description**

- US 63477925